# EUROPÄISCHE PATENTSCHRIFT

(11) **EP 1 634 469 B1**
(45) Veröffentlichungstag und Bekanntmachung des Hinweises auf die Patenterteilung: **11.09.2013**
(21) Anmeldenummer: 04741722.5
(22) Anmeldetag: 03.06.2004
(51) Int. Cl.: H04W 4/12, H04W 88/18

(54) **VERFAHREN ZUM MODIFIZIEREN EINER MULTIMEDIA-NACHRICHT DURCH NETZWERKSEITIGE ANWENDUNG VON APPLIKATIONEN**
METHODS FOR MODIFYING A MULTIMEDIA MESSAGE BY USING APPLICATIONS ON THE NETWORK SIDE
PROCEDES DE MODIFICATION D'UN MESSAGE MULTIMEDIA PAR L'UTILISATION COTE RESEAU D'APPLICATIONS

(30) Priorität: 16.06.2003 DE 10327056
(43) Veröffentlichungstag der Anmeldung: 15.03.2006
(73) Patentinhaber: Intel Mobile Communications GmbH, 85579 Neubiberg (DE)
(72) Erfinder: SCHMIDT, Andreas, 38124 Braunschweig (DE); SCHWAGMANN, Norbert, 38102 Braunschweig (DE)
(74) Vertreter: Viering, Jentschura & Partner
(86) Internationale Anmeldenummer: PCT/EP2004/051012
(87) Internationale Veröffentlichungsnummer: WO 2004/114693

(56) Entgegenhaltungen:
- EP-A- 1 271 970
- WO-A-2004/006593
- US-A1- 2003 065 802
- US-B2- 6 333 919
- "Digital cellular telecommunications system (Phase 2+); Universal Mobile Telecommunications System (UMTS); Multimedia Messaging Service (MMS); Functional description; Stage 2 (3GPP TS 23.140 version 5.5.0 Release 5); ETSI TS 123 140" ETSI STANDARDS, EUROPEAN TELECOMMUNICATIONS STANDARDS INSTITUTE, SOPHIA-ANTIPO, FR, Bd. 3-T2, Nr. V550, Dezember 2002 (2002-12), XP014007803 ISSN: 0000-0001

## Beschreibung

Für Mobilfunksysteme der nächsten Generationen (2.5G und 3G) wie z.B. UMTS (Universal Mobile Telecommunications System) wird zur Zeit eine multimediafähige Variante eines mobilen Nachrichtendienstes standardisiert, der sogenannte MMS-Service (MMS = Multimedia Messaging Service). Einzelheiten hierzu finden sich in den Spezifikationen 3GPP TS22.140 Version 5.4.0, Release 5, Third Generation Partnership Project, Technical Specification Group Services and System Aspects, Service Aspects, Stage 1, Multimedia Messaging Service (MMS), sowie in 3GP TS23.140 Version 5.6.0, Release 5, Third Generation Partnership Project, Technical Specification Group Terminals, Multimedia Messaging Service (MMS), Functional Description, stage 2. Nachrichten mit multimedialen Inhalten werden im Rahmen der Erfindung nur noch kurz MM (MM = Multimedia Message) genannt. Multimedia-Nachrichten können nicht nur Text-, sondern auch Bild-, Audio-, und/oder sonstige Kommunikationsinhalte in ein oder mehreren Nachrichtenelementen enthalten. Im Gegensatz zum vorbekannten SMS (short message service) in GSM (Global System for Mobile Telecommunication) entfällt die Beschränkung auf reine Textinhalte. Beim MMS wird es somit möglich sein, beispielsweise Texte dem individuellen Geschmack entsprechend zu formatieren, sowie Audio-und Videoinhalte in eine Nachricht einzubetten. Eine Multimedia-Nachricht (abgekürzt MM) kann also aus mehreren Multimedia-Nachrichtenelementen unterschiedlichen Dateityps (z.B. Audio- oder Standbild) oder Dateiformats (bei Standbildern z.B. GIF oder JPEG) zusammengesetzt sein.

Praktische Probleme können nun beim Versenden oder Empfangen solcher Multimedia-Nachrichten beispielsweise dadurch gegeben sein, dass die Hardware- und Softwareausstattungen von Funk-kommunikationsgeräten, insbesondere von Mobilfunkgeräten, Multimedia-Nachrichtenelemente hinsichtlich Typ, Format, Funktion, sowie sonstiger Eigenschaften in unterschiedlicher Weise sowie mit lediglich starr festgelegter Einstellung, nur eingeschränkt, oder gar nicht unterstützen.

Aus "Digital cellular telecommunications system (Phase 2+); Universal Mobile Telecommunications System (UMTS); Multimedia Messaging Service (MMS); Functional description; Stage 2 (3GPP TS 23.140 version 5.5.0 Release 5); ETSI TS 123 140" ETSI STANDARDS, EUROPEAN TELECOMMUNICATIONS STANDARDS INSTITUTE, SOPHIA-ANTIPO, FR, Bd. 3-T2, Nr. V550, Dezember 2002 (2002-12), XP014007803 ISSN: 0000-0001 ist der Transfer von Multimedia-Nachrichten von einem sendenden User Agent, beispielsweise auf einer Mobilstation, über zwei MMS Relay/Server zu einem empfangenden User Agent bekannt. Der dem empfangenden User Agent zugeordnete MMS Relay/Server modifiziert die Multimedia-Nachricht basierend auf den Fähigkeiten des Terminals und einem Benutzerprofil. Die Fähigkeiten des Terminals werden dabei entweder mit jeder "Message Delivery Request" individuell abgefragt oder aber durch eine WAP-Session für alle Nachrichten im Voraus festgelegt und im Netz gespeichert.

Die US 2003/065802 A1 beschreibt ebenfalls die Modifikation von Multimedia-Nachrichten in einem dem empfangenden User Agent zugeordneten MMS Relay/Server basierend auf vordefinierten Parametern, wie zum Beispiel Provider, User-Profile, Terminal-Profile mit Fähigkeiten des Terminals, und dynamischen Parametern, wie beispielsweise individuell abgefragten Fähigkeiten des Terminals.

Der Erfindung liegt die Aufgabe zugrunde, einen Weg aufzuzeigen, wie Multimedia-Nachrichten und deren Inhalte für die Benutzer von Kommunikationseinheiten eines Funkkommunikationssystems in flexibler und einfacher Weise benutzerspezifisch modifiziert und übermittelt werden können. Diese Aufgabe wird sendeseitig durch folgendes erfindungsgemäße Verfahren gelöst : Verfahren zum Modifizieren einer Multimedia-Nachricht, die von einer ersten Kommunikationseinheit eines Funkkommunikationsnetzes abgeschickt wird, wobei vorab individuell für die jeweilig abzusendende Multimedia-Nachricht von der sendenden Kommunikationseinheit spezifisch ein oder mehrere Applikationen vorausgewählt werden, wobei von der sendenden Kommunikationseinheit an mindestens eine sendeseitig zugeordnete Netzwerkkomponente des Funkkommunikationsnetzes mindestens ein Steuersignal übertragen wird, mit dem dieser Netzwerkkomponente die individuell ausgewählten Applikationen mitgeteilt werden, wobei aufgrund dieses Steuersignals von der sendeseitig zugeordneten Netzwerkkomponente veranlasst wird, dass die individuell für die vorliegende Multimedia-Nachricht ausgewählten Applikationen netzwerkseitig aktiviert und auf diese Multimedia-Nachricht vor deren Versenden netzwerkseitig angewandt werden, und wobei erst dann die derart individuell modifizierte Multimedia-Nachricht von der sendeseitig zugeordneten Netzwerkkomponente über die empfangsseitig zugeordnete Netzwerkkomponente an eine zweite, empfangsseitige Kommunikationseinheit abgesandt wird.

Entsprechend dazu betrifft die Erfindung empfangsseitig folgendes korrespondierende Verfahren:
Verfahren zum Modifizieren einer Multimedia-Nachricht, insbesondere nach einem der vorhergehenden Ansprüche, die einer Kommunikationseinheit eines Funkkommunikationsnetzes mit Hilfe eines Benachrichtungssignals zum Empfang von einer empfangsseitig zugeordneten Netzwerkkomponente angeboten wird, wobei vorab vor dem Abruf der jeweiligen Multimedia-Nachricht durch die empfangende Kommunikationseinheit individuell für diese zu empfangende Multimedia-Nachricht ein oder mehrere Applikationen durch die empfangende Kommunikationseinheit spezifisch vorausgewählt werden, wobei von der empfangenden Kommunikationseinheit an die empfangsseitig zugeordnete Netzwerkkomponente des Funkkommunikationsnetzes mindestens ein Steuersignal übertragen wird, mit dem dieser Netzwerkkomponente die ausgewählten Applikationen mitgeteilt werden, und wobei von der empfangseitig zugeordneten Netzwerkkomponente veranlasst wird, dass die individuell für die vorliegende Multimedia-Nachricht ausgewählten Applikationen netzwerkseitig aktiviert und auf diese Multimedia-Nachricht vor ihrem Empfangen bei der Kommunikationseinheit netzwerkseitig angewandt werden, und wobei erst dann die derart individuell modifizierte Multimedia-Nachricht an die empfangende Kommunikationseinheit übertragen wird.

Durch die selektive Vorauswahl von ein oder mehreren Applikationen, die auf die jeweilige Multimedia-Nachricht vor ihrem Versenden oder ihrem Empfang netzwerkseitig angewandt werden, kann der jeweilige Benutzer einer Kommunikationseinheit in flexibler Weise sowie individualisiert Modifikationen oder Einstellungen für diese bestimmte Multimedia-Nachricht und damit allgemein betrachtet von einer abzusendenden Multimedia-Nachricht zur nächsten abzusendenden Multimedia-Nachricht, für seine Kommunikationseinheit spezifisch vornehmen. Da die Applikationen netzwerkseitig von mindestens einer Netzwerkkomponente des Funkkommunikationsnetzes ausgeführt werden, kann der Aufwand endgeräteseitig in der jeweiligen Kommunikationseinheit gering gehalten werden. Auch wird eine unzulässige Belastung der Luftschnittstelle zwischen der jeweiligen Kommunikationseinheit und der Netzwerkkomponente weitgehend vermieden, da die Applikationen auf der Netzwerkseite verbleiben und es nicht erforderlich ist, ihre meist sehr umfangreichen Softwarepakete bzw. Ablaufprozeduren über die Luftschnittstelle zur Bearbeitung der jeweilig zu sendenden oder zu empfangenden Multimedia-Nachricht zu transferieren. Weiterhin können selbst solche Multimedia-Nachrichten interoperabel zwischen den verschiedenen Kommunikationseinheiten von Benutzern des Funkkommunikationssystems ausgetauscht werden, deren Kommunikationsgeräte voneinander verschiedene Hardware- und Softwareeigenschaften sowie Funktionen aufweisen, z. B. da sie bei verschiedenen Diensteanbietern oder Funkkommunikationsnetzbetreibern eingeschrieben sind. Denn jetzt kann jede abzusendende oder zu empfangende Multimedia-Nachricht individuell an die Kommunikationseigenschaften und-fähigkeiten der jeweiligen Kommunikationseinheit netzwerkseitig vor dem Versenden oder dem Empfangen angepasst werden. Von Vorteil ist es insbesondere, dass die jeweilige Multimedia-Nachricht nach individuellen Wünschen eines Benutzers gezielt modifiziert werden kann. So kann es beispielsweise für einen Kommunikationsteilnehmer von Interesse sein, Bildbestandteile von Multimedia-Nachrichten lediglich im GIFFormat auf seinem Kommunikationsgerät angezeigt zu bekommen, da die Displayeigenschaften seines Endgeräts und die dazu unterstützten Dateiformate nur dafür ausreichend ausgelegt sind. Daneben wird ihm auch ermöglicht, ausgewählte weitere Operationen, wie z. B. Virenschutzprogramme, auf die zu sendende oder zu empfangende Multimedia-Nachricht anzuwenden.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen :

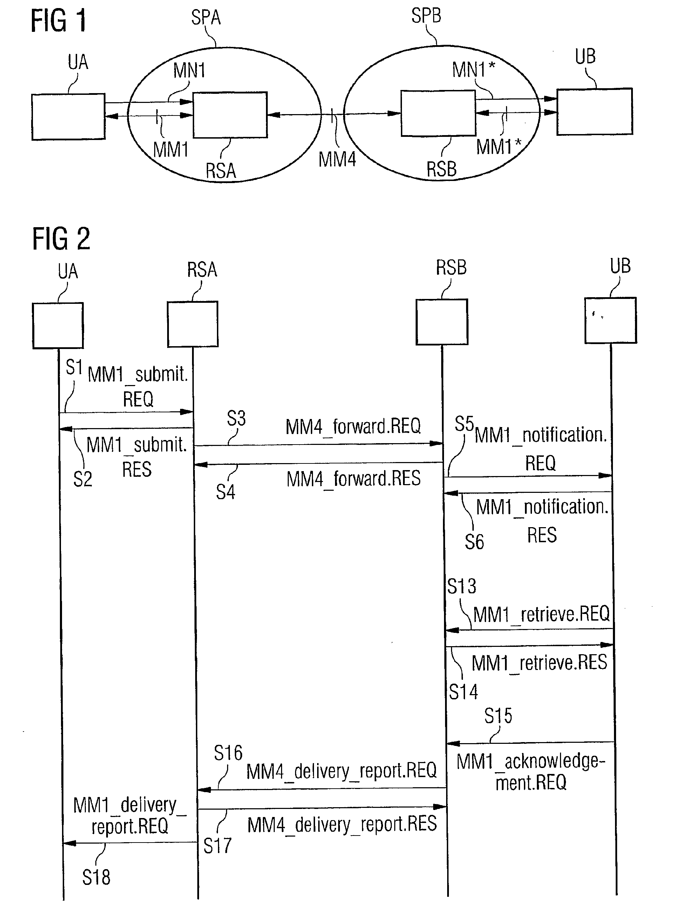

Figur 1 in schematischer Darstellung eine MMS-Netzwerk-Architektur zum Austausch von Multimedia-Nachrichten zwischen mindestens zwei Kommunikationseinheiten eines Funkkommunikationssystems,
Figur 2 in schematischer Darstellung den zeitlichen Ablauf von Signalisierungssignalen zur Übermittlung einer Multimedia-Nachricht zwischen den beiden Kommunikationseinheiten von Figur 1 über ihre netzwerkseitig zugeordneten MMS Relais/Server,

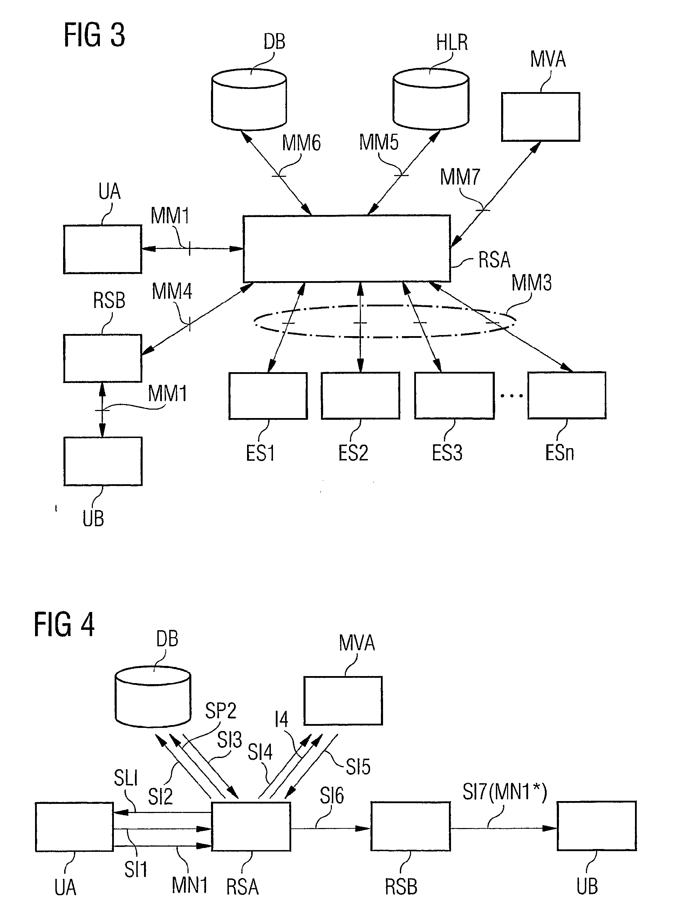

Figur 3 in schematischer Darstellung den MMS Relais/Server, der der ersten Kommunikationseinheit von Figur 2 zugeordnet ist, und dessen Schnittstellenanbindungen zu weiteren Netzwerkkomponenten des Funkkommunikationsnetzes nach Figur 1,
Figur 4 in schematischer Darstellung den zeitlichen Ablauf von Signalisierungssignalen zwischen der ersten und zweiten Kommunikationseinheit nach Figur 1 zur Aktivierung mindestens einer Applikation auf einem MMS VASP Server, der an den MMS Relais/Server der ersten Kommunikationseinheit angekoppelt ist, individuell, d. h. spezifisch für die jeweilig zu über mittelnde Multimedia-Nachricht unter Zuhilfenahme eines individuell einstellbaren Auswahlprofils nach einer ersten Variante des erfindungsgemäßen Verfahrens,

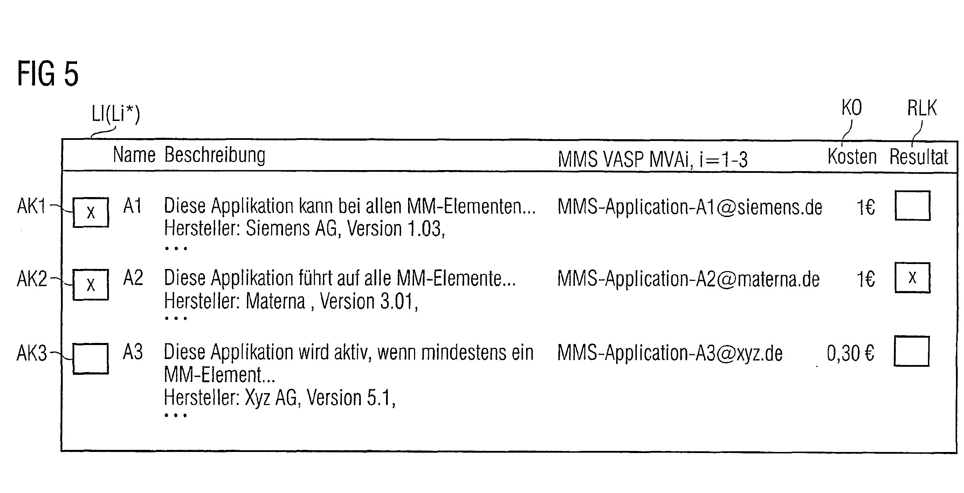

- Figur 5: in schematischer Darstellung eine Auswahlliste mit mehreren Applikationen, die vor dem Versenden oder Empfangen einer bestimmten Multimedia-Nachricht der jeweiligen Kommunikationseinheit vorab durch mindestens eine Netzwerkkomponente entsprechend der Architektur von Figur 1 vorab bereitgestellt wird,

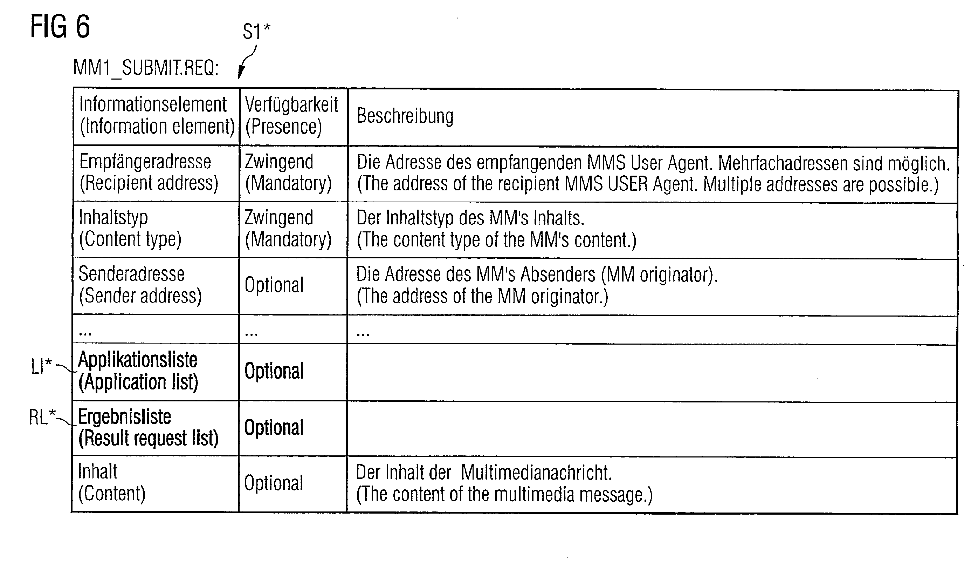

- Figur 6: beispielhaft ein Übermittlungssignal zum Absenden einer Multimedia-Nachricht durch die erste, sendende Kommunikationseinheit von Figur 1, das um eine Auswahlliste bzw. Applikationsliste von aktivierten und/oder deaktivierten Applikationen erweitert ist, wobei die aktivierten Applikationen von mindestens einer Netzwerkkomponente auf die aktuell zu versendende Multimedia-Nachricht individuell bzw. spezifisch angewandt werden sollen,

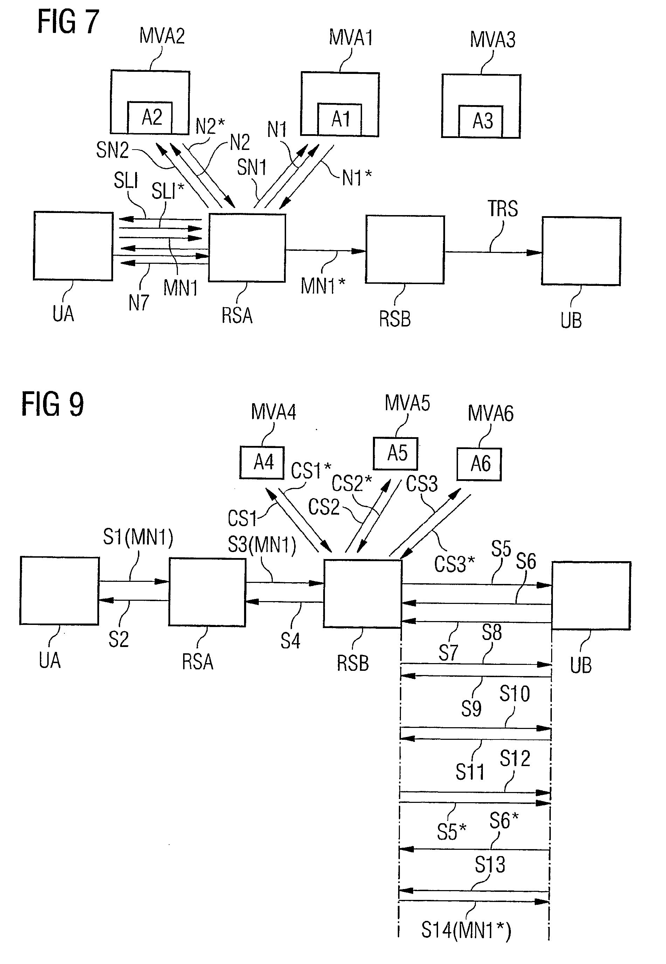

- Figur 7: in schematischer Darstellung eine weitere Variante des erfindungsgemäßen Verfahrens zum individuellen Modifizieren einer abzusendenden Multimedia-Nachricht mittels netzwerkseitig ablaufender Applikationen mit Hilfe einer Netzwerkstruktur, bei der mehrere MMS VASP Server an denjenigen MMS Relais/Server angekoppelt sind, der der sendenden Kommunikationseinheit zugeordnet ist,
- Figur 8: in schematischer Darstellung die Struktur eines Rückantwortsignals, das von dem sendeseitig zugeordneten Relais/Server an die sendende Kommunikationseinheit von Figur 7 zurückübermittelt wird und eine Ergebnisreportliste darüber enthält, ob die jeweilig ausgewählte Applikation erfolgreich oder fehlerhaft auf die abzusendende Multimedia-Nachricht angewandt worden ist,

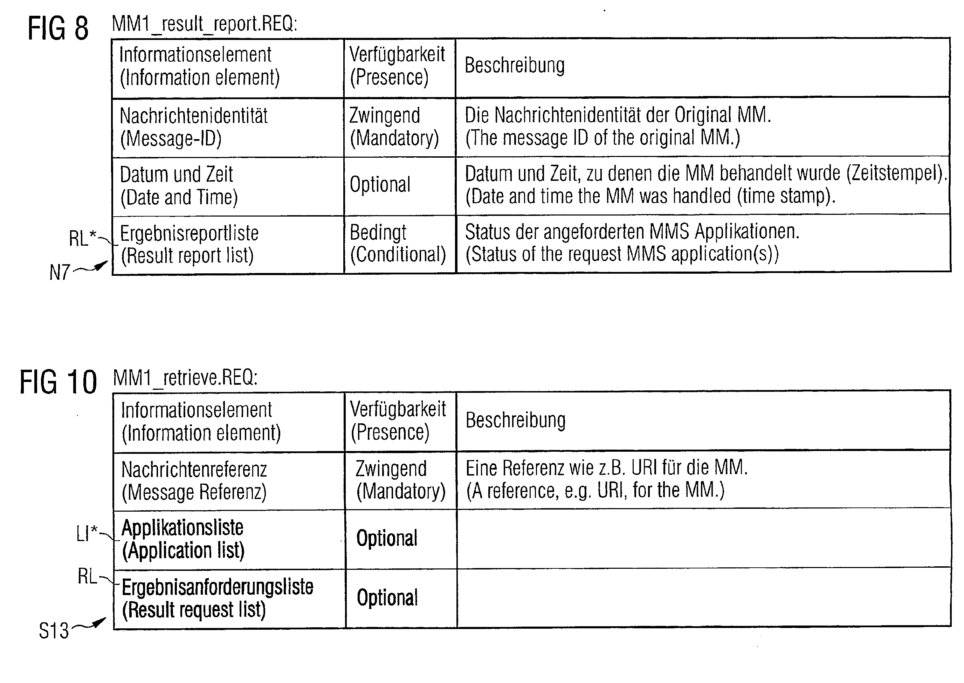

- Figur 9: in schematischer Darstellung den zeitlichen Ablauf von Signalisierungssignalen beim Abrufen einer Multimedia-Nachricht, die an die zweite, empfangende Kommunikationseinheit von Figur 1 gerichtet ist, wobei vorab individuell für diese zu empfangende Multimedia-Nachricht ein oder mehrere netzwerkseitige Applikationen durch die empfangende Kommunikationseinheit vorausgewählt werden, so dass nur diese auf ein oder mehreren MMS VASP Servern gestartet werden, die an den MMS Relais/Server angekoppelt sind, der der empfangenden Kommunikationseinheit zugeordnet ist,
- Figur 10: beispielhaft eine Abrufnachricht, mit der die empfangende Kommunikationseinheit von Figur 1 die an sie gerichtete Multimedia-Nachricht von ihrem empfangsseitig zugeordneten MMS Relais/Server entsprechend dem Signalisierungsablauf von Figur 9 abruft, wobei die Abrufnachricht um eine Auswahlliste von zu aktivierenden und/oder zu deaktivierenden Applikationen auf den MMS VASP Servern erweitert worden ist,

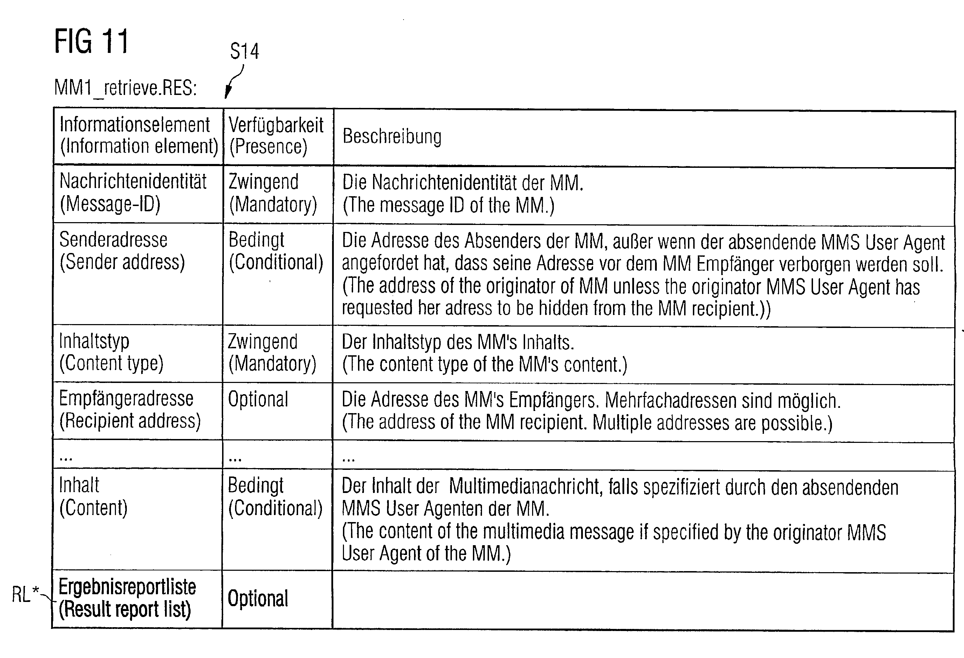

- Figur 11: die schematische Struktur eines Rückantwortsignals mit einer Ergebnisreportliste, das der empfangenden Kommunikationseinheit nach der Ausführung der netzwerkseitig durchgeführten Applikationen vom zugeordneten MMS Relais/Server übermittelt wird, und

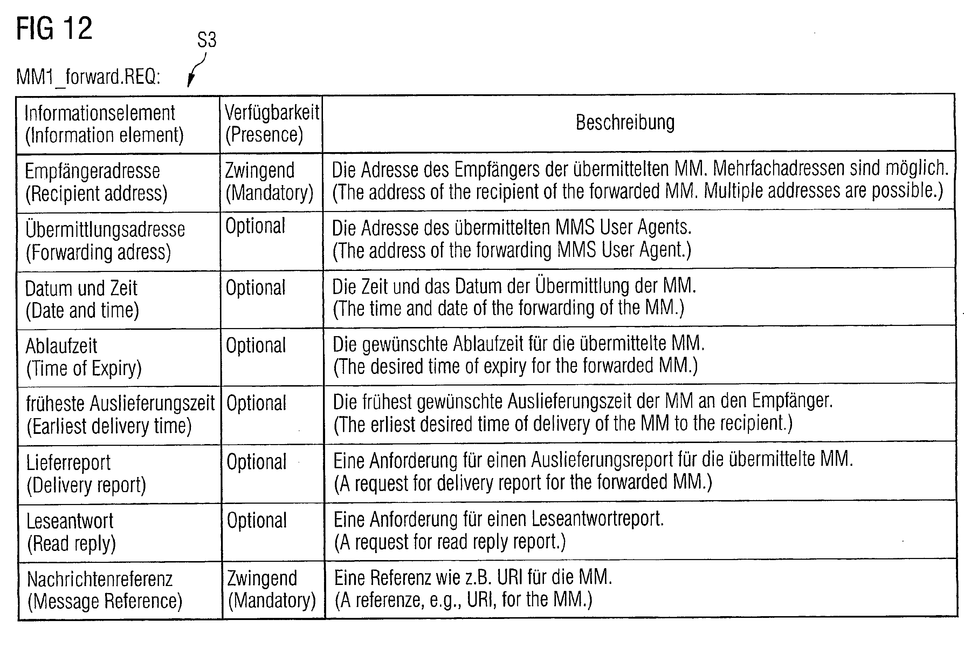

- Figur 12: in schematischer Darstellung für eine weitere Variante des erfindungsgemäßen Verfahrens ein Aktivierungssignal, das die empfangende Kommunikationseinheit an ihren zuständigen MMS Relais/Server zur Weitervermittlung an denjenigen MMS VASP Server sendet, auf dem die jeweilig ausgewählte Applikation gespeichert ist.

Elemente mit gleicher Funktion und Wirkungsweise sind in den Figuren 1 mit 12 jeweils mit denselben Bezugszeichen versehen.

Figur 1 zeigt in schematischer Darstellung die Grundstruktur einer MMS-Netzwerk-Architektur (MMS = Multimedia Messaging Service) als Teil eines Funkkommunikationssystems FN. Dieses ist insbesondere nach dem sogenannten UMTS-Standard (Universal Mobile Telecommunications System) ausgebildet. Die MMS-Netzwerk-Architektur weist hier im Ausführungsbeispiel eine erste, sendeseitige Kommunikationseinheit UA auf, die vorzugsweise Bestandteil eines Funkkommunikationsgerätes, insbesondere Mobilfunkgerätes ist. Gegebenenfalls kann die erste Kommunikationseinheit UA auch in einem sonstigen Kommunikationsendgerät wie z.B. Laptop, PDA (Personal Digital Assistant), oder in einem sonstigen Adaptergerät vorgesehen sein, das an ein Funkkommunikationsgerät angeschlossen ist. Die erste Kommunikationseinheit UA umfasst einen sogenannten MMS User Agent, d.h. eine Ablauflogik z.B. in Form eines Softwareprogramms, der Multimedia-Nachrichten - abgekürzt MM (Multimedia Message) - senden, empfangen und/oder bearbeiten kann. Sie steht mit einer sendeseitig zugeordneten Netzwerkkomponente RSA in Wirkverbindung, die eigens netzwerkseitig zum Steuern und Bereitstellen eines Multimedia Services bzw. Dienstes (MMS) vorgesehen ist. Die Netzwerkkomponente RSA ist insbesondere als sogenannter MMS Relais/Server ausgebildet. Dies ist ein Netzwerkelement, das Kommunikationseinheiten, die im Zuständigkeitsbereich SPA seines ersten MMS Service-Providers angekoppelt sind, die MMS-Funktionalität zur Verfügung stellt. Im UMTS heißt dieser Zuständigkeitsbereich des jeweiligen MMS Relais/Servers Multimedia Messaging Service Environment, abgekürzt MMSE.

In der Figur 1 ist der Übertragungspfad zwischen der ersten Kommunikationseinheit UA und dem sendeseitig zugeordneten MMS Relais/Server RSA durch einen Doppelpfeil gekennzeichnet und dessen Schnittstelle für das Übertragen von Multimedia-Nachrichten mit MM1 bezeichnet. Dieser Übertragungspfad umfasst insbesondere eine Luftschnittstelle bzw. Funkstrecke zwischen der Kommunikationseinheit UA und der Basisstation in deren Aufenthaltsfunkzelle sowie mindestens eine Festverbindungsstrecke von dieser Basisstation zu ein oder mehreren übergeordneten, stationären Funknetzwerkeinheiten. Letztere Komponenten des Funkkommunikationsnetzes FN sind in der Figur 1 der Übersichtlichkeit halber weggelassen worden.

Der erste MMS Relais/Server RSA ist in der Figur 1 netzwerkseitig über eine weitere Schnittstelle MM4 mit einem zweiten MMS Relais/Server RSB zum Übertragen von Multimedia-Nachrichten übertragungstechnisch verbunden. Dieser zweite MMS Relais/Server RSB ist als empfangsseitige Netzwerkkomponente vorgesehen, die in ihrem Zuständigkeitsbereich SPB für ein oder mehrere an ihr angekoppelte Kommunikationseinheiten den Multimedia-Message Service eines zweiten MMS Providers zur Verfügung stellt und verwaltet. Am zweiten MMS Relais/Server RSB hängt in der Figur 1 über eine Schnittstellenverbindung MM1* entsprechend zur sendeseitigen Schnittstellenverbindung MM1 eine zweite Kommunikationseinheit UB. Diese weist zum Senden, Empfangen und/oder Verarbeiten von Multimedia-Nachrichten ebenfalls einen MMS User Agent in analoger Weise zur ersten Kommunikationseinheit UA auf. Die zweite Kommunikationseinheit UB ist ebenfalls vorzugsweise Bestandteil eines Funkkommunikationsgeräts, insbesondere Mobilfunkgeräts, oder eines sonstigen, daran angeschlossenen Endgeräts.

Im vorliegenden Ausführungsbeispiel sendet die erste Kommunikationseinheit UA eine Multimedia Nachricht MN1 an die zweite Kommunikationseinheit UB. Dazu werden zwischen der ersten Kommunikationseinheit UA und dem ihr sendeseitig zugeordneten, ersten MMS Relais/Server RSA, netzwerkseitig zwischen dem ersten MMS Relais/Server RSA und dem zweiten, empfangsseitigen MMS Relais/Server RSB, sowie zwischen dem zweiten MMS Relais/Server RSB und der diesem zugeordneten, zweiten Kommunikationseinheit UB Signalisierungssignale übertragen, deren zeitlicher Ablauf in der Figur 2 anhand eines Signalisierungsdiagramms (englisch "Transaction Flow Diagram") veranschaulicht ist. Dabei sind die Schnittstellen dieser vier Komponenten UA, RSA, RSB, UB, zwischen denen die Signalisierungssignale ausgetauscht werden, durch vertikale Geradenlinien dargestellt. Im Einzelnen wird von der ersten Kommunikationseinheit UA die Multimedia-Nachricht MN1 (siehe Figur 1) mit Hilfe des Signalisierungssignals S1 ("MM1_submit.REQ") an den netzwerkseitig zugeordneten MMS Relais/Server RSA geschickt. Der dortige Empfang des Signalisierungssignals S1 wird mit Hilfe eines Rückantwortsignals S2 ("MM1_submit.RES") quittiert, das von dem ersten MMS Relais/Server RSA an die die Multimedia-Nachricht MN1 absendende Kommunikationseinheit UA zurückübertragen wird. Daraufhin wird die Multimedia-Nachricht vom ersten MMS Relais/Server RSA an den zweiten MMS Relais/Server RSB mit Hilfe eines Vermittlungs- bzw. Routingsignals S3 ("MM4_forward.REQ") übermittelt. Dessen Empfang beim zweiten MMS Relais/Server RSB wird durch ein Rückantwortsignal S4 ("MM4_forward.RES") bestätigt, das in Gegenrichtung zum Sendesignal S3 vom zweiten MMS Relais/Server RSB an den ersten MMS Relais/Server RSA zurückübertragen wird. Anschließend wird die zweite Kommunikationseinheit UB, an die die Multimedia-Nachricht MN1 gerichtet ist, mit Hilfe eines Benachrichtigungssignals S5 ("MM1_notification.REQ") von dem zweiten, empfangssseitig zugeordneten MMS Relais/Server RSB darüber informiert, dass für ihn netzwerkseitig die Multimedia-Nachricht MN1 abholbereit bereitgehalten wird. Der ordnungsgemäße Empfang dieses Benachrichtigungssignals S5 wird von der empfangenden Kommunikationseinheit UB durch ein Rückantwortsignal S6 ("MM1_notification.RES") an den empfangsseitig zugeordneten MMS Relais/Server RSB quittiert. Aufgrund des Benachrichtigungssignals S5 ist nun die zweite Kommunikationseinheit UB darüber informiert, dass die Multimedia-Nachricht MN1 auf dem für sie netzwerkseitig zuständigen MMS Relais/Server RSB zur Abholung bereitsteht. Die dort bereitgehaltene Multimedia-Nachricht MN1 wird daraufhin von der zweiten Kommunikationseinheit UB mit Hilfe eines Anforderungssignals S13 ("MM1_retrieve.REQ") angefordert. Erst daraufhin überträgt der zweite MMS Relais/Server RSB den Inhalt der Multimedia-Nachricht MN1 mit Hilfe eines Übertragungssignals S14 ("MM1 retrieve.RES") an die zweite Kommunikationseinheit UB. Diese schickt daraufhin ein Antwortsignal S15 ("MM1_acknowledgement.REQ") an den zugeordneten, zweiten MMS Relais/Server RSB zurück, um diesem das Eintreffen der Multimedia-Nachricht MN1 bei der empfangenden Kommunikationseinheit UB mitzuteilen. Danach überträgt der zweite MMS Relais/Server RSB das Ergebnis des Multimedia-Nachrichtenempfangs an den ersten MMS Relais/Server RSA mit Hilfe eines Antwortsignals S16 ("MM4_delivery_report.REQ") zurück, wobei dessen dortiger Empfang durch Zurücksenden eines Antwortsignals S17 ("MM4_delivery_report.RES") an den zweiten MMS Relais/Server RSB eigens quittiert wird. Nachfolgend übermittelt der erste MMS Relais/Server RSA ein Rückantwortsignal S18 ("MM1_delivery_report.req") an die angekoppelte erste Kommunikationseinheit UA zurück, die ursprünglich die Multimedia-Nachricht MN1 an die zweite Kommunikationseinheit UB versandt hat. Durch das Antwortsignal S18 wird der ersten Kommunikationseinheit UA vom Relais/Server RSA ein Übertragungsreport bereitgestellt, in dem die Signalisierungen und Kommunikationsverbindungen zwischen den einzelnen Sende-/Empfangspaaren UA/RSA, RSA/RSB, RSB/UB hinsichtlich ihres ordnungsgemäßen Versendens und Empfangs sowie etwaige Übertragungsfehler und/oder Fehlverbindungen aufgelistet sind.

Figur 3 zeigt in schematischer Darstellung beispielhaft die Anbindung des ersten, sendeseitig zugeordneten MMS Relais/Servers RSA zu weiteren Netzwerkkomponenten. So hat der MMS Relais/Server RSA neben seiner Übertragungsschnittstelle MM1 zur angekoppelten, sendenden Kommunikationseinheit UA eine Übertragungsschnittstelle MM6 zu mindestens einer Datenbasis DB, in der benutzerspezifische Daten abgelegt sind. Diese Datenbasis bzw. Speichervorrichtung DB verwaltet insbesondere solche benutzerspezifischen Informationen, die für den Multimedia Messaging Service relevant sind. In 3GPP wird diese Datenbasis DB mit MMS User Data Base bezeichnet. Über die weitere Schnittstelle MM5 ist der MMS Relais/Server RSA mit mindestens einer Speichervorrichtung HLR verbunden, die Informationen über den Aufenthaltsort und die aktuelle Adresse der jeweilig am MMS teilnehmenden Kommunikationseinheit wie z.B. UA administriert. Sie wird insbesondere durch das sogenannte Home Location Register gebildet. Weiterhin hat der MMS Relais/Server RSA die Schnittstellenverbindung MM4 zum zweiten MMS Relais/Server RSB, der der zweiten, empfangenden Kommunikationseinheit UB netzwerkseitig zugeordnet ist. Dieser zweite MMS Relais/Server RSB wird hier im Ausführungsbeispiel von einem anderen, zweiten MMS Provider verwaltet, der vom MMS Provider des ersten MMS Relais/Servers RSA verschieden ist. Daneben hängt der MMS Relais/Server RSA über weitere Schnittstellenverbindungen MM3 an einer Vielzahl von weiteren, externen Servern ES1 mit ESn, mit denen er z.B. Faxe, E-Mails, SMS-Nachrichten (short message service) in Hin- und Rückrichtung austauschen kann. Schließlich ist an den MMS Relais/Server RSA über eine Schnittstelle MM7 ein weiterer Server MVA, d.h. allgemein ausgedrückt mindestens eine weitere Netzwerkkomponente, angekoppelt. Diese hält ein oder mehrere Applikationen zur Modifikation bzw. Veränderung von ein oder mehreren Multimedia-Nachrichten bereit, die beim MMS Relais/Server RSA ankommen oder von diesem zur Absendung bereit gemacht werden.

Für jeden MMS User Agent bzw. für jeden MMS Benutzer, der bei einem bestimmten MMS Service Provider bzw. MMS Diensteanbieter registriert ist, kann ein sogenanntes User Agent Profil, d.h. Benutzerprofil, in mindestens einer netzwerkseitigen Datenbasis bzw. Speichervorrichtung wie z.B. DB in Figur 3 des Funkkommunikationssystems FN angelegt werden. Dort sind die charakteristischen Daten der Kommunikationseinheit wie z.B. UA, auf der die jeweilige MMS User Agent-Prozedur des Benutzers abläuft, und/oder individuelle Einstellungen des jeweiligen Benutzers registriert. Charakteristische Daten können beispielsweise Displayeigenschaften, geräteunterstützte Dateiformate, sowie sonstige, vorgegebene Kommunikationseigenschaften- und/oder -funktionen der jeweiligen Kommunikationseinheit und/oder deren zugehöriges Kommunikationsgerät sein. Eine individuelle Einstellung eines Benutzers kann beispielsweise sein, dass alle Multimedia-Nachrichten einer bestimmten Kategorie wie z.B. "Werbung", die an die Kommunikationseinheit gesendet oder von diesem abgesandt werden, automatisch ausgeblendet oder gelöscht werden. Diese User Agent Profile werden im Zuständigkeitsbereich wie z.B. SPA des jeweiligen MMS Relais/Servers wie z.B. RSA, der von einem spezifischen MMS Service Provider betrieben wird, verwaltet und sind somit dem MMS Service Provider bekannt.

Auf jede einzelne Multimedia-Nachricht, die versandt oder empfangen wird, können vorab individuell ein oder mehrere MMS Applikationen angewandt werden. Eine MMS Applikation kann dabei auf eine zu versendende oder zu empfangende Multimedia-Nachricht als Ganzes oder auch nur auf Teile hiervon - den sogenannten MM (Multimedianachrichten)-Elementen - angewandt werden. Vorteilhafte MMS Applikationen sind beispielsweise die Untersuchung von MM-Elementen auf Viren, das Übersetzen von MM-Elementen des Dateityps Text in eine andere Sprache, die Umwandlung von Bildelementen in ein bestimmtes Format wie z.B. GIF oder JPEG. Solche Applikationen sind zweckmäßigerweise auf mindestens einer weiteren, separaten Netzwerkkomponente wie z.B. auf dem Applikations-Server MVA von Figur 3 hinterlegt und werden dort für den jeweiligen Benutzer als aktivier- oder deaktivierbar bereitgehalten. Der jeweilige Applikations-Server wie z.B. MVA ist dabei entsprechend der Figur 3 über die Schnittstellenverbindung MM7 mit einem zugeordneten MMS Relais/Server wie z.B. RSA kommunikationstech-nisch verbunden, der der Multimedia-Nachrichten sendenden oder empfangenden Kommunikationseinheit wie z.B. UA oder UB sendeseitig zugeordnet ist.

Der jeweilige Applikations-Server ist vorzugsweise als sogenannter MMS VASP (Multimedia Service Value Added Service Provider) Server im 3GPP-Standard ausgebildet. Dies ist ein eigenständiges Netzwerkelement, das verschiedenen MMS Service Providern eine Reihe von unterschiedlichen MMS Applikationen für den MMS anbietet. Dabei wird zweckmäßigerweise eine Zusammenarbeit eingegangen, die technisch zwischen dem MMS VASP Server und dem jeweiligen MMS Relais/Server, der von einem bestimmten Service Provider verwaltet wird, über die Schnittstelle MM7 (vgl. Figur 3) abgewickelt wird. Ein Kunde oder Anwender eines MMS Service Providers kann dann ein oder mehrere MMS Applikationen eines solchen MMS VASP Servers über seinen MMS Service Provider entweder standardmäßig, d.h. starr eingestellt, für alle eingehenden oder alle abgehenden Multimedia-Nachrichten abonnieren und/oder individuell für jede abzusendende oder zu empfangende Multimedia-Nachricht einzeln und damit spezifisch für die jeweilig zu versendende oder zu empfangende Multimedia-Nachricht zur Anwendung auswählen. Die jeweilig ausgewählte Applikation wird zweckmäßigerweise in seinem Benutzerprofil in der Datenbank DB vermerkt. Weiterhin wird dort und/oder im sendeseitig zuständigen MMS Relais/Server RSA eine Liste mit Applikationen geführt, die auf den angeschlossenen Applikations-Servern zur Auswahl bereitgehalten werden, d.h. zur Aktivierung und/oder Deaktivierung verfügbar sind. Diese Auswahlliste wird zweckmäßigerweise im Sendefall vom sendeseitig oder im Empfangsfall vom empfangsseitig zuständigen MMS Relais/Server verwaltet und aktualisiert. Genauso kann es zweckmäßig sein, diese Auswahlliste in der Datenbank DB selbst zu administrieren und diese dann dem jeweiligen MMS Relais/Server wie z.B. RSA oder RSB bei Bedarf zu übermitteln.

### Sendeseite:

Zunächst wird der Fall betrachtet, dass von der sendeseitigen Kommunikationseinheit UA von Figur 1 eine aktuelle Multimedia-Nachricht an eine empfangsseitig zugeordnete Netzwerkeinheit zur Modifikation bzw. Manipulation der Multimedia-Nachricht mittels individuell vorausgewählter Applikationen abgeschickt wird und erst dann diese modifizierte Multimedia-Nachricht an die empfangsseitige Kommunikationseinheit UB übermittelt wird:

Bevor nun eine Multimedia-Nachricht wie z.B. MN1 von der ersten Kommunikationseinheit UA an die zweite Kommunikationseinheit UB übertragen wird, wird entsprechend Figur 4 von dem sendeseitig zuständigen Relais/Server RSA an die erste Kommunikationseinheit UA ein Informationssignal SLI mit einer solchen Auswahlliste LI geschickt, die eine Auflistung der netzwerkseitig verfügbaren Applikationen enthält. Figur 5 zeigt beispielhaft eine derartige Auswahlliste LI. Sie enthält die Namen von drei netzwerkseitig verfügbaren Applikation A1, A2, A3, zugehörige Auswahlkästchen bzw. Checkboxen AKi mit i=1 bis 3 zur Markierung des jeweiligen Applikationswunsches, eine zugehörige Beschreibung über die Funktion der angebotenen Applikationen, die Adressen von drei MMS VASP Servern MVAi mit i=1 bis 3, auf denen diese Applikationen A1 bis A3 einzeln ablauffähig bereitgehalten werden, die Kosten KO für den Aufruf und die Anwendung jeder angebotenen Applikation sowie zugehörige Resultatfeldkästchen RLK. Deren Markierung steht dafür, dass ein Rückantwortsignal mit Information über den Durchführungsstatus der jeweiligen Applikation von der sendenden Kommunikationseinheit UA gewünscht wird.

Im vorliegenden Ausführungsbeispiel von Figur 4 ist an den sendeseitigen Relais/Server RSA lediglich ein einzelner MMS VASP Server MVA angeschlossen, auf dem alle drei Applikationen A1 mit A3 gespeichert sind. Die Auswahlliste LI von Figur 5 enthält in diesem Fall anstelle der dortigen drei verschie-denen MMS VASP Server MVA1 mit MVA3 jeweils denselben MMS VASP Server MVA für alle Applikationen A1 mit A3. Aus dieser angebotenen Liste LI wählt der Benutzer an seiner Kommunikationseinheit UA die beiden Applikationen A1, A2 durch Ankreuzen der zugehörigen Auswahlkästchen AK1, AK2 aus. Anschließend wird die derart gekennzeichnete Auswahlliste bzw. das Auswahlprofil LI* mit den markierten Applikationen A1, A2 an den sendeseitig zugeordneten MMS Relais/Server RSA mit Hilfe eines Steuersignals SI1 übertragen. Allgemein ausgedrückt wird also von der sendenden Kommunikationseinheit vorab vor dem Versenden der Multimedia-Nachricht an den sendeseitig zugeordneten MMS Relais/Server mindestens ein Steuersignal geschickt, mit dem individuell gewünschte Applikationen zur Anwendung auf die aktuell zu versendende Multimedia-Nachricht netzwerkseitig aktiviert werden. Zweckmäßigerweise wird dabei das in der Datenbasis DB zuletzt abgelegte Auswahlprofil für den Benutzer mit dem aktuell gewünschten Auswahlprofil, das an den MMS Relais/Server RSA vorab übermittelt worden ist, abgeglichen bzw. aktualisiert oder durch dieses ganz ersetzt. Ggf. kann es auch zweckmäßig sein, die Datenbasis DB in dem sendeseitig zugeordneten MMS Relais/Server RSA zu integrieren.

Erst daraufhin wird die Multimedia-Nachricht MN1 selbst vom MMS User Agent der sendenden Kommunikationseinheit UA an den User Agent des zugeordneten Relais/Servers RSA verschickt. Dann wird sie von diesem zum hier in Figur 4 zuständigen, einzigen MMS VASP Server MVA, d.h. allgemein ausgedrückt Applikationsserver, übertragen. Auf diesem einzigen Applikationsserver MVA sind die verschiedenen Applikationen A1 mit A3 durch zugehörige Adressen identifizierbar und ansprechbar. Dort wird die Multimedia-Nachricht aufgrund des in der MMS User Data Base DB und/oder auf dem MMS Relais/Server RSA abgelegten Auswahlprofils LI* gegebenenfalls bearbeitet, anschließend vom jeweiligen Applikationsserver zurück zum MMS Relais/Server RSA übertragen und erst dann vom MMS Relais/Server RSA zum empfangsseitig zuständigen MMS Re-lais/Server RSB transferiert, der der empfangsseitigen Kommunikationseinheit UB zugeordnet ist. Dieser empfangsseitige Relais/Server RSB übermittelt dann die modifizierte Multimedia-Nachricht an die empfangsseitige Kommunikationseinheit UB.

Ggf. kann es auch zweckmäßig sein, das Steuersignal zur Manipulation einer bereits an den Relais/Server abgesandten Multimedia-Nachricht an den sendeseitigen Relais/Server nachzuschicken und dann durch diesen die gewünschten Modifikationen der Multimedia-Nachricht vor deren endgültigem Absenden an die Empfangsseite durchführen zu lassen. Auch kann es ggf. vorteilhaft sein, das jeweilige Steuersignal gleichzeitig mit der zu modifizierenden Multimedia-Nachricht an den sendeseitig zugeordneten Relais/Server zu versenden.

Beim Übertragungskonzept für eine zu versendende Multimedia-Nachricht von einer ersten zu einer zweiten Kommunikationseinheit des Funkkommunikationsnetzes nach Figur 4 sind beispielhaft alle auswählbaren Applikationen A1 mit A3 auf dem einzigen Applikationsserver MVA bereitgestellt, der an den sendeseitigen MMS Relais/Server RSA angekoppelt ist. Nach der spezifischen Auswahl der gewünschten Applikationen A1, A2 für die vorliegende Multimedia-Nachricht MN1 z.B. durch den Benutzer der Kommunikationseinheit UA, nach entsprechender Mitteilung dieses Auswahlprofils LI* an den sendeseitig zugeordneten MMS Relais/Server RSA, und Abspeicherung des Auswahlprofils LI* in der Datenbasis DB (z.B. durch ein Abspeicherungssignal SP2 in Figur 4) schickt der User Agent der ersten Kommunikationseinheit UA die Multimedia-Nachricht MN1 mit Hilfe eines Übertragungssignals ("MM1_submit.REQ") zum sendeseitig zuständigen MMS Relais/Server RSA. Dieser ruft über die Schnittstellenverbindung MM6 (siehe Figur 3) mit Hilfe eines Anforderungssignals SI2 in der MMS User Data Base DB das aktuelle Auswahlprofil LI* ab, das dort für den User Agent der Kommunikationseinheit UA vorab durch das Abspeicherungssignal SP2 abgespeichert worden ist. Der MMS Re-lais/Server RSA schaut also über die Schnittstelle MM6 in der MMS Benutzerdatenbasis DB nach, ob und welche Applikationen auf die aktuell zu versendende Multimedia-Nachricht netzwerkseitig angewendet werden sollen. Die MMS Benutzerdatenbasis DB schickt bei Vorhandensein eines Auswahlprofils LI* ein Antwortsignal SI3 mit entsprechenden Steuersignalen zum Aktivieren der spezifisch gewünschten Applikationen an den MMS Relais/Server RSA zurück. Dieser übermittelt das von der Datenbasis DB abgerufene Auswahlprofil LI* und/oder entsprechende Steuersignale SI4 zur Aktivierung der jeweilig ausgewählten Applikationen an den angekoppelten MMS VASP Server MVA. Dorthin überträgt er anschließend oder gleichzeitig die zu versendende, aber vorab noch individuell zu bearbeitende Multimedia-Nachricht MN1 über eine Schnittstelle MM7 (siehe Figur 3). Dieses Versenden der Multimedia-Nachricht vom MMS Relais/Server RSA zum zuständigen MMS VASP Server MAV ist in der Figur 4 durch einen Pfeil 14 angedeutet. Nachdem auf dem MMS VASP Server MVA die vorab oder gleichzeitig mit der Multimedia-Nachricht MN1 ausgewählten und aktivierten MMS Applikationen - hier A1 und A2 - auf diese zu versendende Multimedia-Nachricht angewandt worden sind, wird die modifizierte Multimedia-Nachricht MN1* über die gleiche Schnittstelle MM7 zurück zum sendeseitig zuständigen MMS Relais/Server RSA übertragen, was in der Figur 4 durch einen Pfeil SI5 dargestellt ist. Erst anschließend wird die derart veränderte Multimedia-Nachricht zum empfangsseitig zuständigen MMS Relais/Server RSB mit Hilfe eines Übertragungssignals SI6 übermittelt. Dieser leitet die durch die ausgewählten Applikationen A1 und A2 nacheinander spezifisch veränderte Multimedia-Nachricht MN1* mit Hilfe eines Übertragungssignals SI7 an den User Agent der empfangsseitigen Kommunikationseinheit UB weiter, an den die ursprüngliche, unveränderte Multimedia-Nachricht MN1 gerichtet war. In der Figur 4 ist dies dadurch veranschaulicht, dass das Bezugszeichen MN1* der modifizierten Multimedia-Nachricht in Klammern hinter dem Bezugszeichen SI7 für das zugehörige Übertragungssignal gesetzt ist. Alternativ kann das jeweilige Auswahlprofil LI*, das für die aktuell zu versendende Multimedia-Nachricht spezifisch erstellt und vorab, gleichzeitig, oder nach dieser an den sendeseitig zugeordneten MMS Relais/Server übermittelt worden ist, auch nur dort abgelegt werden, so dass der Signalaustausch zur Datenbasis DB entfallen kann. Das Auswahlprofil wird also in diesem Fall zweckmäßigerweise lediglich auf dem sendeseitig zugeordneten Relais/Server RSA abgespeichert.

Figur 7 veranschaulicht anhand einer gegenüber Figur 4 abgewandelten, weiteren Ausführungsvariante, wie für eine abzusendende Multimedia-Nachricht eine spezifische Vorauswahl von netzwerkseitig anzuwendenden Applikationen durchgeführt, die Multimedia-Nachricht mit diesen vorausgewählten Applikationen netzwerkseitig modifiziert und dann erst losgeschickt wird. Damit ein Benutzer eines User Agents auf einer Kommunikationseinheit die Möglichkeit hat, individualisiert für eine abzusendende Multimedia-Nachricht zu entscheiden, ob und welche MMS Applikation(en) spezifisch auf die vorliegende Multimedia-Nachricht netzwerkseitig angewendet werden soll(en), wird dem User Agent auf der sendeseitigen Kommunikationseinheit UA in vorteilhafter Weise eine Auswahlliste von netzwerkseitig verfügbar gehaltenen Applikationen vom sendeseitig zuständigen MMS Relais/Server vorab, d.h. vor dem Versenden der ursprünglichen Multimedia-Nachricht, übermittelt.

Dazu wird in der Figur 7 als erstes eine Auswahlliste LI mit einer Gesamtaufstellung der netzwerkseitig insgesamt verfügbaren Applikationen vom sendeseitig zuständigen MMS Relais/Server RSA an die angekoppelte Kommunikationseinheit UA mit Hilfe des Informationssignals SLI übertragen. Figur 5 zeigt diese Auswahlliste LI beispielhaft mit drei Applikationen A1, A2, A3, die für den Benutzer auf der Kommunikationseinheit UA individuell bzw. spezifisch vorab vor dem Versenden der Multimedia-Nachricht MN1 an die empfangsseitige Kommunikationseinheit UB auswählbar sind. Die Applikation A1 ist im vorliegenden Ausführungsbeispiel von Figur 7 auf dem ei-gens vorgesehenen MMS VASP Server MVA1 netzwerkseitig abgelegt, der in Verbindung mit dem MMS Relais/Server RSA steht. Die beiden weiteren Applikationen A2, A3 sind jeweils eigens auf zwei weiteren MMS VASP Servern MVA2, MVA3 separat voneinander abgespeichert, die ebenfalls eine Kommunikationsverbindung zum MMS Relais/Server RSA aufweisen. Jeder Applikationsserver MVA1 mit MVA3 ist dabei durch eine eigene Adresse ansprechbar, die in der Liste LI von Figur 5 jeweils rechts neben dem Namen der jeweilig auswählbaren Applikation A1 mit A3 angegeben ist. Der Benutzer des User Agent der Kommunikationseinheit UA hat nun beispielsweise die MMS Applikation A1 ohne Resultatmitteilung bereits standardmäßig für alle seine zu versendenden Multimedia-Nachrichten von seinem MMS Service Provider abonniert. Er erhält deshalb in der Auswahlliste LI von Figur 5, die er mit dem Signal SLI geliefert bekommt, diese Applikation A1 als bereits vorausgewählt durch ein Kreuzchen in der Checkbox AK1 gekennzeichnet. Von den zwei MMS Applikationen A2, A3, die dem Benutzer ebenfalls in der Auswahlliste LI mit angeboten werden, wählt der Benutzer in einem entsprechenden Menü aus, dass er zusätzlich noch die Applikation A2 mit Resultatmitteilung auf die zu versendende Multimedia-Nachricht angewendet haben möchte. Dazu füllt der Benutzer das Auswahlkästchen AK2 vor dem Namen der Prozedur A2 in der Auswahlliste LI mit einem Kreuzchen aus (siehe Figur 5). Sein Wunsch auf Lieferung einer Resultatmitteilung kennzeichnet er in der letzten Spalte (= Resultatliste) der Auswahlliste LI ebenfalls durch ein Kreuzchen in einem entsprechenden Auswahlkästchen RLK. Mit der Resultatmitteilung möchte der Benutzer erfahren, ob die ausgewählte Applikation erfolgreich oder fehlerhaft von dem MMS VAS Server MVA2 auf die zu versendende Multimedia-Nachricht angewandt worden ist. Die Applikation A3 wählt der Benutzer im vorliegenden Ausführungsbeispiel in der Liste LI nicht aus. Dieser Deaktivierungswunsch für die Applikation A3 ist in der Figur 5 durch ein leeres Kästchen AK3 vor dem Namen der Prozedur A3 charakterisiert bzw. markiert. Die Auswahlliste mit den als zu aktivieren gekennzeichneten Applikationen A1, A2 sowie der als zu deaktivieren gekennzeichneten Applikation A3 sendet die Kommunikationseinheit UA hier im Ausführungsbeispiel von Figur 7 an den MMS Relais/Server RSA mit Hilfe eines Steuersignals SLI*, bevor die eigentliche, erstellte Multimedia-Nachricht MN1 von der Kommunikationseinheit UA abgesetzt, d.h. losgesandt wird. Diese vorab transferierte Auswahlliste mit den als aktiviert und deaktiviert gekennzeichneten Applikationen A1 mit A3 ist in der Figur 7 mit dem Bezugszeichen LI* versehen.

Nach dem Empfang dieser gekennzeichneten Auswahlliste LI* aktiviert der MMS Relais/Server RSA die Applikation A1 auf dem MMS VASP Server MVA1 mit Hilfe eines Steuersignals SN1. Mit Hilfe eines Steuersignals SN2 macht der MMS Relais/Server RSA den angekoppelten MMS/VASP Server MVA2 darauf aufmerksam, seine Applikation A2 für die zeitlich nachfolgende Multimedia-Nachricht MN1 zu aktivieren und auf diese anzuwenden. Ggf. kann es zweckmäßig sein, dass der MMS Relais/Server RSA Quittierungssignale von den Servern MVA1, MVA2 darüber zurückerhält, dass nunmehr die Applikationen A1, A2 als ausgewählt für die nachfolgende Multimedia-Nachricht gelten. Darüber kann der MMS Relais/Server ggf. auch die Kommunikationseinheit UA mit Hilfe eines Rückantwortsignals informieren. Diese Quittierungssignale sind in der Figur 7 der zeichnerischen Übersichtlichkeit halber weggelassen worden.

Nach diesen vorbereitenden Steuersignalen wird nun von dem User Agent der Kommunikationseinheit UA die eigentlich zu versendende, erstellte Multimedia-Nachricht MN1 an den MMS Relais/Server RSA abgesandt, der nach einer vorgebbaren Priorisierung, d.h. zeitlichen Reihenfolge die Multimedia-Nachricht MN1 mittels Übertragungssignale N1, N2 zeitlich nacheinander an die Applikationsserver MVA1, MVA2 überträgt. Der jeweilige Applikationsserver MVA1, MVA2 wendet dann die jeweils ausgewählte Applikation A1, A2 in den vorgegebenen Reihenfolge auf die zu versendende Multimedia-Nachricht MN1 an und sendet die jeweilig modifizierte Multimedia-Nachricht mittels Transfersignale N1*, N2* an den MMS Relais Server RSA zurück. Die erfolgten Applikationen-Anwendungen quittiert der MMS Relais/Server RSA mit Hilfe eines Bestätigungssignals N7 an die Kommunikationseinheit UA. Die Transfersignale N1*, N2* und das Bestätigungssignal N7 enthalten die für die Applikation A2 früher angeforderte Ergebnismitteilung, ob die Applikation erfolgreich oder etwaig mit Fehlern behaftet vom MMS VASP Server MVA2 durchgeführt worden ist.

Insgesamt betrachtet empfängt also der MMS Relais/Server RSA zuerst die gekennzeichnete Auswahlliste LI* mit den markierten, gewünschten auszuführenden Applikationen, nämlich hier A1, A2 sowie den nicht auszuführenden Applikationen wie z.B. hier A3. Diese empfangene Auswahlliste LI* wertet der MMS Relais/Server RSA aus. Dabei ermittelt er zweckmäßigerweise aus der ausgewählten MMS Applikation A2 und der nicht deaktivierten, sondern fest abonnierten Applikation A1 selbsttätig eine priorisierte Abarbeitungsliste wie z.B. nach der zeitlichen Reihenfolge A1, A2. Ggf. kann es auch zweckmäßig sein, dass der Benutzer der Kommunikationseinheit UA selbst in der Auswahlliste LI* zusätzlich noch eine priorisierte Auswahl der zu aktivierenden Applikationen und/oder der zu deaktivierenden Applikationen selbständig vornehmen kann. Die Priorisierung kann ihm dazu im Steuersignal SLI* von der sendeseitigen hommunikationseinheit UA mitgeteilt und vorgegeben werden. Mit Hilfe von Steuersignalen wie hier N1, N2 ruft dann der MMS Relais/Server RSA die ausgewählten, zu aktivierenden Applikationen A1, A2 auf den Applikationsservern MVA1, MVA2 einzeln auf. Alternativ dazu können die Steuersignale auch zusammen mit der Multimedia-Nachricht MN1 als Anhang zu dieser oder in diese integriert vom MMS Relais/Server jeweils an die zuständigen Applikationsserver verschickt werden. Diese Steuersignale N1, N2 enthalten auch eine Anforderung an den jeweiligen MMS VASP Server MVA1, MVA2, dass dieser eine Resultatmitteilung nach Durchführung der entsprechenden Applikation auf die zu bearbeitende Multimedia-Nachricht an den MMS Relais/Server RSA zurückliefert. Dies kann durch separate Rückantwortsignale erfolgen oder ggf. als Zusatzinformation an die durch die jeweilige Applikation bearbeitete Multimedia-Nachricht angehängt werden. Die nacheinander in der vorgegebenen Reihenfolge durch die Applikationen A1, A2 modifizierte Multimedia-Nachricht MN1* wird schließlich mit Hilfe eines zugehörigen Transfersignals TRS vom sendeseitigen MMS Relais/Server RSA an den User Agent der zweiten Kommunikationseinheit UB als Zieladresse zugestellt.

Alternativ kann es ggf. zweckmäßig sein, das Steuersignal SLI* nicht vorab zu versenden, sondern in das Übertragungssignal der Multimedia-Nachricht MN1 gleichzeitig bei deren Versendung von der sendenden Kommunikationseinheit UA zur sendeseitig zugeordneten Netzwerkkomponente RSA zu integrieren oder zusätzlich als Erweiterung aufzunehmen. Ebenfalls kann es ggf. zweckmäßig sein, die Steuersignale SN1 und SN2 nicht vorab zu versenden, sondern in das Übertragungssignal der Multimedia-Nachricht MN1 gleichzeitig bei deren Versendung von der sendeseitig zugeordneten Netzwerkkomponente RSA zum jeweiligen MMS VASP Server MVA1 bzw. NVA2 zu integrieren oder zusätzlich als Erweiterung aufzunehmen.

Z.B. entsprechend dem Ausführungsbesipiel von Figur 7 übergibt der MMS Service Provider dem Anwender zweckmäßigerweise eine Liste aller MMS Applikationen, die für zu versendende Multimedia-Nachrichten netzwerkseitig verfügbar sind (z.B. mit Hilfe einer MM oder per Signalisierung wie z.B. SLI). Diese kann z.B. einmalig vom MMS Relais/Server des MMS Service Providers an die sendeseitige Kommunikationseinheit, insbesondere Mobilfunkgerät, übergeben, dort gespeichert und bei Bedarf vom MMS Service Provider aktualisiert werden. Eine andere Möglichkeit ist, dass der Anwender sich diese Auswahlliste immer nach Bedarf aktuell vom sendeseitig zugeordneten MMS Relais/Server herunterlädt. Diese Liste enthält vorzugsweise nicht nur den Namen der netzwerkseitig bereitgehaltenen Applikationen, sondern auch eine nähere Beschreibung deren Funktion und Wirkungsweise, Identifikationssignale für die zuständigen MMS VASPs (beispielsweise Adressen) und Informationen über die Kosten für den Anwender (siehe Auswahlliste LI von Figur 5).

Wenn der Anwender eine Multimedia-Nachricht (abgekürzt: MM) versenden möchte, wählt er aus dieser Liste die MMS Applikationen aus, die er auf diese MM angewendet haben möchte. In der an ihn vorab übermittelten Auswahlliste werden zweckmäßigerweise all diejenigen MMS Applikationen, die der Anwender auf zu sendende MMs abonniert hat, als ausgewählt angezeigt. Vorzugsweise hat der Anwender die Möglichkeit, eine bestimmte, fest abonnierte MMS Applikation für diese eine, aktuell zu versendende MM abzuschalten, indem er die entsprechende MMS Applikation als nicht ausgewählt markiert. Zudem hat er die Möglichkeit, bei jeder ausgewählten MMS Applikation das Resultat anzufordern.

Sobald der Anwender die MM verschicken möchte, wird sie über die Schnittstelle MM1 (siehe Figur 1) mit Hilfe der Nachricht S1 *"MM1_submit.REQ"* vom MMS User Agent der Kommunikationseinheit UA zum MMS Relais/Server RSA übermittelt (siehe Figur 2). Zusätzlich wird dem MMS Relais/Server RSA die Auswahlliste (z.B. die Liste der ausgewählten MMS Applikationen und der deaktivierten abonnierten MMS Applikationen) zu dieser MM mitgeteilt. Diese Liste kann ggf. auch als zusätzliches Informationselement in die Versendenachricht S1 *"MM1_submit.REQ"* der Multimedia-Nachricht MN1 eingefügt werden (siehe Figur 6 zusammen mit Figur 2). Figur 6 zeigt ein solches modifiziertes Versendesignal S1*, mit dem die Multimedia-Nachricht MN1 verschickt wird. Es enthält zusätzlich eine angehängte Applikationsliste LI1* sowie eine eingefügte, eigens bzw. getrennt vorgesehene Resultat- bzw. Ergebnisanforderungsliste RL als weiteres, nachgeordnetes Informationselement. Erweiterungen bzw. Änderungen der Nachricht *"MM1_submit.REQ"* sind dabei in der Figur 6 in Fettschrift eingetragen. Alternativ zu diesen beiden separaten, hinter-einanderfolgenden Listen LI1* und RL kann die Liste LI1* "Application list" mit allen als zu aktivieren und/oder zu deaktivieren gewählten MMS Applikationen mit der Resultatanforderungsliste RL zu einer einzigen, gemeinsamen Liste zusammengefasst werden. Ein Beispiel für eine solche gemeinsame Liste ist die Liste LI* von Figur 5. Sie enthält die gewählten Applikationen inklusive jeweils einem direkt im selben Informationselement "Applikationsliste" hinzugefügten Flag bzw. Marker für die Resultatmitteilung. Für die Resultatmitteilungen kann alternativ auch eine eigene, gleichlange Liste "Result request list" mit den angefragten Resultaten verwendet werden, die eigens von der sendenden Kommunikationseinheit an den zugeordneten Relay/Server und von diesem an die jeweils angesprochenen Applikationsserver übermittelt wird.

Wenn der MMS Relais/Server RSA diese Nachricht S1 empfängt, wertet er die gekennzeichnete Auswahlliste LI1* aus und ermittelt aus allen ausgewählten und nicht deaktivierten, abonnietten MMS Applikationen eine priorisierte Abarbeitungsliste. Die MM MN1 wird dann an den für die höchstpriorisierte MMS Applikation zuständigen MMS VASP geschickt (inklusive der Angabe, um welche MMS Applikation es sich handelt; die Adresse könnte dann z.B. lauten: *applikation_name@vasp_name.com*)*.* Falls der MMS VASP die Applikation (aus irgendeinem Grund) nicht anwenden kann, liefert er ein negatives Resultat. Falls er die Applikation anwenden kann, liefert er die MM (gegebenenfalls nur nötig, wenn sie modifiziert wurde, abhängig von der gewählten MMS Applikation) mit dem positiven Resultat. Danach wird vom MMS Relais/Server gemäß der Priorisierung der gleiche Vorgang für alle gewählten MMS Applikationen wiederholt. Für den Fall, dass nacheinanderfolgende MMS Applikationen vom gleichen MMS VASP Server (z.B. wie in Figur 4) durchgeführt werden, kann es vorteilhaft sein, diesem MMS VASP eine priorisierte Liste der durchzuführenden MMS Applikationen anzugeben, die er dann entsprechend der vorgegebenen Rangfolge der gewählten Applikationen nacheinander abarbeitet, bevor er die MM und alle zugehörigen Resultate zum Relay/Server zurückgibt.

Nachdem alle MMS Applikationen durchgeführt wurden, schickt der MMS Relais/Server RSA die MM MN1 in Richtung des Empfängers weiter. Dem MMS User Agent der Kommunikationseinheit UA wird dann noch die Resultatergebnisliste RL* mit all den Resultaten zurückgeliefert, die von ihm vorher in Zusammenhang mit der Auswahlliste LI1* und der zugeordneten Resultatergebnisliste RL im Steuersignal S1* (siehe Figur 6) angefordert wurden. Dies kann beispielsweise durch eine neu definierte Nachricht "MM1_result_report.REQ" ermöglicht werden, wie sie in der Figur 8 angegeben ist. Ein solches Rückantwortsignal ist in der Figur 7 mit N7 bezeichnet. In der Nachricht "MM1_result_report.REQ" von Figur 8 enthält dabei die Ergebnisreportliste RL* "Result report list" alle zuvor angefragten Resultatmitteilungen.

### Beispiel 1 (Sender):

Ein Benutzer hat die MMS Applikation A1 ohne Resultatmitteilung für seine zu versendenden Multimedia-Nachrichten (MMs) abonniert (siehe Figur 7 zusammen mit Figur 5. In der Figur 5 ist die beispielhafte Auswahlliste LI der zur Verfügung gestellten MMS Applikationen dargestellt. Die Applikation A1 ist hierbei abonniert und wird hier auch noch einmal mit aufgezeigt. Die Applikation A2 soll zusätzlich für die betreffende MM angewendet werden. Alle MMS Applikationen können dabei vom Anwender mit oder ohne Resultatmitteilung aktiviert werden.) Zudem wird dem Benutzer von seinem MMS Service Provider in der Liste LI mit den beiden MMS Applikationen A2 und A3 für zu versendende MMs angeboten. Bevor er eine erstellte MM MN1 verschickt, wählt er in einem entsprechenden Menü aus, dass er zusätzlich noch die Applikation A2 mit Resultatmitteilung auf die MM angewendet haben möchte (siehe Figur 5). Dies ist in der Liste LI* von Figur 5 durch ein Kreuzchen in der Checkbox AK2 angedeutet. Dann wird die MM und die Auswahlliste mit Hilfe der erweiterten Nachricht S1* *"MM1_submit.REQ"* (siehe Figur 6) vom MMS User Agent der Kommunikationseinheit UA zum MMS Relais/Server RSA übermittelt. Der MMS Relais/Server RSA empfängt diese Nachricht S1* und wertet die Auswahlliste LI1* aus. Dabei ermittelt er aus der ausgewählten MMS Applikation A2 und der nicht deaktivierten, abonnierten MMS Applikationen A1 eine priorisierte Abarbeitungsliste, z.B. A2, A1. Die MM MN1 wird dann mit einem Flag, dass eine Resultatmitteilung erwünscht ist, an den MMS VASP Server MVA2 des Providers "Materna" mit der Adresse MMSApplication-A2@materna.de geschickt. Der MMS VASP Server MVA2 wendet die Applikation A2 auf die MM an und liefert die modifizierte MM mit dem positiven Resultat zurück an den MMS Relais/Server RSA. Diese modifizierte MM wird dann an den MMS VASP Server MVA1 von "Siemens" mit der Adresse MMS-Application-A1@siemens.de geschickt. Der MMS VASP MVA1 wendet die Applikation A1 auf die MM an und liefert die weiter modifizierte MM, diesmal jedoch ohne Resultat, an den MMS Relais/Server RSA zurück. Da nun alle gewünschten MMS Applikationen auf die MM angewendet worden sind, kann sie jetzt vom MMS Relais/Server RSA zur Empfangsseite weitergeleitet werden. Zudem wird dann noch die Ergebnisreportliste RL* mit den Resultaten an den Absender geschickt, die in diesem Beispiel nur aus einem Wert für A2 besteht. Dies kann vorzugsweise durch eine neu definierte Nachricht N7 *"MM1_result_report.REQ"* ermöglicht werden, wie sie in Figur 8 dargestellt ist.

### Beispiel 2 (Sender):

Ein Benutzer hat die MMS Applikation A1 ohne Resultatmitteilung für seine zu versendenden MMs (Multimedia-Nachrichten) abonniert. Zudem wird ihm von seinem MMS Service Provider eine Liste LI von zwei MMS Applikationen A2 und A3 für zu versendende MMs angeboten (siehe z.B. Übermittlungssignal SLI in Figur 7 zusammen mit der Auswahlliste LI in Figur 5). Bevor er eine erstellte MM MN1 verschickt, wählt er aus, dass er die Applikation A1 auf diese MM MN1 nicht angewendet haben möchte, stattdessen jedoch die Applikationen A2 und A3 mit Resultatmitteilung. Diesmal ermittelt der MMS User Agent der Kommunikationseinheit UA automatisch oder alternativ vom Anwender vorgegeben aus den ausgewählten MMS Applikationen A2 und A3 eine priorisierte Abarbeitungsliste, wie z.B. in der Reihenfolge A2, A3 (im Beispiel 1 wurde diese Priorisierung vom MMS Relais/Server RSA vorgenommen). Diese priorisierte Auswahlliste wird dann mit der MM MN1 mit Hilfe der erweiterten Nachricht S1* *"MM1_submit.REQ"* (siehe Figur 6) vom MMS User Agent der Kommunikationseinheit UA zum MMS Relais/Server RSA übermittelt. Der restliche Ablauf ist prinzipiell derselbe wie in Beispiel 1. Der Unterschied zwischen diesen beiden Beispielen ist, dass in diesem Beispiel 2 die abonnierte MMS Applikation A1 für diese MM deaktiviert und nicht angewendet wird. Desweiteren wird in diesem Beispiel die Priorisierung der MMS Applikationen vom MMS User Agent der Kommunikationseinheit UA automatisch oder alternativ vom Anwender vorgegeben durchgeführt (in Beispiel 1 macht das hingegen der MMS Relais/Server RSA). Möchte der Benutzer zu einem späteren Zeitpunkt erneut eine MM versenden, dann wird ihm die abonnierte Applikation A1 in der Auswahlliste LI automatisch als aktiviert angeboten, da der Benutzer darauf ein Abonnement hat. Alle anderen Applikationen sind hingegen in der Liste LI neutral (ohne Vormarkierung) aufgeführt.

### Empfangsseite:

Für eine zu empfangende Multimedia-Nachricht kann in entsprechender Weise zur Sendeseite eine spezifische, d.h. individualisierte Anwendung von ein oder mehreren netzwerkseitigen Applikationen durchgeführt werden, bevor die derart modifizierte Multimedia-Nachricht vom empfangsseitigen MMS Relais/Server RSB letztendlich zur dort angekoppelten, empfangsseitigen Kommunikationseinheit UB übertragen wird. Diese Vorgehensweise wird näher anhand der Figur 9 erläutert, die wiederum die Sende-/Empfangsarchitektur von Figur 1 zeigt.

Bei dieser Sende-/Empfangsarchitektur sind an dem empfangsseitig zugeordneten MMS Relais/Server RSB mehrere MMS VASP Applikationsserver MVA4, MVA5, MVA6 angekoppelt, auf denen separat die Applikationen A4, A5, A6 bereitgehalten werden. Zuerst wird die Multimedia-Nachricht MM1 mit Hilfe des Sendesignals S1 "MM1_submit.REQ" an den sendeseitig zugeordneten MMS Relais/Server RSA übermittelt. Deren dortiges Eintreffen wird durch das Bestätigungssignal S2 "MM1_submit.RES" quittiert, das zur sendeseitigen Kommunikationseinheit UA zurückübertragen wird. Anschließend leitet der sendeseitige MMS Relais/Server RSA die Multimedia-Nachricht MN1 mit Hilfe des Transportsignals S3 "MM4_forward.REQ' an den empfangsseitigen MMS Relais/Server RSB weiter. Zur Quittierung dessen Empfangs im empfangsseitigen MSS Relais/Server RSB wird das Rückantwortsignal S4 "MM4_forward.RES" zum sendeseitigen MMS Relais/Server zurückgeschickt. Anschließend wird vom empfangsseitigen MMS Relais/Server RSB ein Benachrichtigungssignal S5 "MM1_notification.REQ" an die empfangsseitige Kommunikationseinheit UB geschickt, um dieser mitzuteilen, dass die Multimedia-Nachricht MN1 bzw. deren Nachrichtenelemente abholbereit auf dem zugeordneten MMS Relais/Server RSB vorliegen. Der Empfang dieses Benachrichtungssignals S5 bei der empfangsseitigen Kommunikationseinheit UB wird mit einem zum Relais/Server RSB zurückgesandten Bestätigungssignal S6 "MM1_notification.RES" quittiert. Anschließend werden von der empfangsseitigen Kommunikationseinheit UB zeitlich nacheinander die Steuersignale bzw. Anforderungssignale S7, S9, S11 an den empfangsseitig zugeordneten MMS Relais/Server RSB geschickt, um diesen zu veranlassen, nacheinander die Applikationen A4, A5, A6 mit Hilfe der Applikationsserver MVA4, MVA5, MVA6 auf die Multimedia-Nachricht MN1 anzuwenden und diese oder Teile von ihr in gewünschter Weise zu modifizieren. Zur Aktivierung der Applikation A4 sendet der MMS Relais/Server RSB ein Aktivierungssignal CS1 an den MMS VASP Applikationsserver MVA4 und überträgt dorthin zusammen mit diesem Aktivierungssignal oder separat von diesem die Multimedianachricht MN1 zur Bearbeitung mit der Applikation A4.

Das Ende bzw. der Abschluss der Anwendung A4 wird mit einem Antwortsignal CS1* dem MMS Relais/Server RSB angezeigt. Zusammen mit diesem oder unabhängig hiervon wird die durch die Applikation A4 modifizierte Multimedia-Nachricht an den Relais/Server RSB zurückübertragen. Dies wird der Kommunikationseinheit UB entsprechend durch ein Quittierungssignal S8 mitgeteilt, das vom MMS Relais/Server abgeschickt wird und mit dem anfordernden Steuersignal S7 korrespondiert. In analoger Weise wird durch ein Aktivierungssignale CS2 nachfolgend die Applikation A5 auf dem Applikationsserver MVA aktiviert und auf die mit der ersten Applikation A4 bereits vorbearbeiteten Multimedia-Nachricht angewandt, die dorthin vom Relais/Server RSB mit dem Signal CS2 oder separat hiervon übertragen worden ist. Der Abschluss dieser Anwendung A5 wird dem MMS Relais/Server RSB durch das Quittierungssignal CS2* angezeigt. Mit diesem oder separat hiervon wird die derart bearbeitete Multimedia-Nachricht zum Relais/Server RSB zurückübertragen. Dieser sendet daraufhin der Kommunikationseinheit UB ebenfalls ein Antwortsignal S10, das zum anfordernden Steuersignal S9 korrespondiert. Ganz entsprechend wird auf das anfordernde Steuersignal S11 hin vom MMS Relais/Server RSB ein Aktivierungssignal CS3 an den Applikationsserver MVA6 abgeschickt, um auf die durch die beiden Applikationen A4, A5 bereits vorbearbeitete Multimedia-Nachricht die Applikation A6 anzuwenden. Die bereits durch die Applikationen A4, A5 modifizierte Multimedia-Nachricht kann dabei mit dem Signal CS3 oder separat hiervon zum MMS VASP Server MVA6 transportiert worden sein. Der Abschluss dieser Applikation A6 wird dem MMS Relais/Server RSB mit einem Quittierungssignal CS3* angezeigt, der wiederum mit einem Rückantwortsignal S12 der Kommunikationseinheit UB das Ende der Applikation A6 angibt und die fertig bearbeitete MM zurückliefert. Ggf. kann die fertig bearbeitete Multimedia-Nachricht auch mit einem separaten Übertragungssignal zum Relais/Server RSB zurückübertragen werden. Der Kommunikationseinheit UB wird somit jeweils zu jedem Applikations-Anforderungssignal S7, S9, S11 ein entsprechendes, zugehöri-ges Rückantwortsignal S8, S10, S12 von der empfangsseitig zugeordneten Netzwerkkomponente RSB übermittelt, ob die jeweilig ausgewählte Applikation A4, A5, A6 erfolgreich oder fehlerhaft auf die jeweilig zu empfangende Multimedia-Nachricht MN1 angewendet worden ist. Erst daraufhin entscheidet sich der Benutzer, die Inhalte der derart modifizierten Multimedia-Nachricht vom empfangsseitig zugeordneten MMS Relais/Server abzurufen. Dazu sendet seine Kommunikationseinheit UB ein Abrufsignal S13 "MM1_retrieve.REQ" an den zugeordneten MMS Relais/Server RSB. Daraufhin übermittelt dieser mit dem Transportsignal S14 "MM1_retrieve.RES" die angeforderten Inhalte der modifizierten Multimedia-Nachricht MN1*. Die derart modifizierte Multimedia-Nachricht MN1* wird also erst eigens auf Extra-Anforderung des Empfängers vom MMS Relais/Server RSB an die empfangende Kommunikationseinheit UB übertragen, an die die ursprüngliche Multimedia-Nachricht MN1 adressiert ist.

Im vorliegenden Ausführungsbeispiel von Figur 9 wird das jeweilige Steuersignal bzw. Applikations-Anforderungssignal wie z.B. S7, S9, S11 separat vor dem Anforderungssignal S13, das zum Abruf der modifizierten Multimedianachricht MN1* von der empfangende Kommunikationseinheit UB an die empfangsseitig zugeordnete Netzwerkkomponente gesendet wird, zur empfangsseitig zugeordneten Netzwerkkomponente, insbesondere Relais/Server, übertragen. Mit Hilfe jeweils einer neu zu definierenden Extranachricht wie z.B. S7, S9, S11 wird also die jeweilige Applikation wie z.B. A4, A5, A6 von der Kommunikationseinheit UB aus angewählt.

Alternativ dazu kann ggf. das jeweilige Steuersignal S7, S9, S11 zur Applikationsauswahl in das Anforderungssignal S13 integriert oder dort als zusätzliche Erweiterung aufgenommen werden, das zum eigentlichen Abruf der anstehenden, modifizierten Multimedia-Nachricht MN1* von der empfangenden Kommunikationseinheit UB an die empfangsseitig zugeordnete Netzwerkkomponente RSB gesendet wird.

Anstelle der einzeln versandten Steuersignale wie z.B. S7, S9, S11 zum Applikationsauf kann es insbesondere zweckmäßig sein, dass von der empfangenden Kommunikationseinheit UB eine Auswahlliste mit ein oder mehreren ausgewählten Applikationen - wie hier A4 mit A6 - an den empfangsseitig zugeordneten Relais/Server RSB vorab zugestellt wird. Diese Auswahlliste wird zweckmäßigerweise vorab vor dem Abruf der jeweiligen Multimedia-Nachricht von dem empfangsseitig zuständigen MMS Relais/Server RSB an die jeweilig angekoppelte, empfangende Kommunikationseinheit wie z.B. UB zur Auswahl mindestens einer Applikation übertragen. Die Auswahlliste mit den vom Benutzer für die spezifisch vorliegende MM individuell als zu aktivieren und/oder zu deaktivieren gewünschten Applikationen wird zweckmäßigerweise von der jeweilig empfangenden Kommunikationseinheit an den zugeordneten MMS Relais/Server zurückübertragen, um diesem anzuzeigen, welche Applikationen zur Modifikation der dort eingetroffenen Multimedia-Nachricht gewünscht sind. Diese gekennzeichnete Auswahlliste mit den aktivierten und/oder deaktivierten Applikationen kann zweckmäßigerweise vom empfangsseitigen MMS Relais/Server an mindestens einen MMS VASP Server als separate Netzwerkeinheit weiter übertragen werden.

Insgesamt betrachtet werden zum Modifizieren einer Multimedia-Nachricht, die einer Kommunikationseinheit eines Funkkommunikationsnetzes mit Hilfe eines Benachrichtungssignals zum Empfang angeboten wird, vorab vor dem Abruf der jeweiligen Multimedia-Nachricht durch die empfangende Kommunikationseinheit individuell für diese zu empfangende Multimedia-Nachricht ein oder mehrere Applikationen durch die empfangende Kommunikationseinheit spezifisch vorausgewählt. Dazu wird von der empfangenden Kommunikationseinheit an mindestens eine empfangsseitig zugeordnete Netzwerkkomponente des Funkkommunikationsnetzes mindestens ein Steuersignal übertragen, mit dem dieser Netzwerkkomponente die ausgewählten Applikationen mitgeteilt werden. Von der empfangseitig zugeordneten Netz werkkomponente wird dann veranlasst, dass die individuell für die vorliegende Multimedia-Nachricht ausgewählten Applikationen netzwerkseitig aktiviert und auf diese Multimedia-Nachricht vor ihrem Empfangen bei der Kommunikationseinheit netzwerkseitig angewandt werden. Erst dann wird die derart individuell modifizierte Multimedia-Nachricht an die empfangende Kommunikationseinheit übertragen.

Im einzelnen wird die empfangende Kommunikationseinheit UB vom MMS Relais/Server RSB über die Schnittstelle MM1 durch die Nachricht S5 *"MM1_notification.REQ"* über die neu beim Relais/Server RSB eingetroffene MM informiert. Auf dieses Benachrichtigungssignal S5 hin wird von der Kommunikationseinheit UB mit dem Antwortsignal S6 *"MM1_notification.RES"* geantwortet (siehe Figur 2). Bevor die Kommunikationseinheit UB mit Hilfe der Anforderungsnachricht S13 *"MM1_retrieve.REQ"* die MM anfordert, wird dem Benutzer der Kommunikationseinheit UB die Möglichkeit gegeben, vorzugsweise aus einer Liste die MMS Applikationen auszuwählen, die er auf diese MM angewendet haben möchte (die Liste ist dabei vorzugsweise entsprechend zum Sendefall ausgebildet; siehe Liste LI in Figur 5). Zweckmäßigerweise kann diese Auswahlliste in die Nachricht S5 *"MM1_notification.REQ"* integriert oder dort als zusätzliche Erweiterung aufgenommen werden. Zweckmäßigerweise werden ebenfalls schon all die MMS Applikationen, die der Anwender auf empfangene MMs fest abonniert hat, als bereits ausgewählt angezeigt. Gegebenenfalls wird dem Anwender die Möglichkeit gegeben, eine abonnierte MMS Applikation für diese eine MM abzuschalten, indem er die entsprechende MMS Applikation als nicht ausgewählt markiert. Zudem hat er die Möglichkeit, bei jeder ausgewählten MMS Applikation das Resultat anzufordern.

Diese gekennzeichnete Auswahlliste wird dann über die Schnittstelle MM1 von der Kommunikationseinheit UB zum zugeordneten MMS Relais/Server RSB übermittelt. Dies kann durch die Erweiterung der schon vorhandenen Nachricht S13 *"MM1_retrive.REQ"* erfolgen, deren Inhalt in der Figur 10 schematisch angegeben ist. Die Nachricht S13 enthält entsprechend zum sendeseitigen Modifikationsfall eine gekennzeichnete Auswahlliste LI1* und eine darin eingebettete, nachgeordnete separate Ergebnis-Anforderungsliste RL. Beispielhafte Erweiterungen der Nachricht *"MM1_retrieve.REQ"* sind dabei in der Figur 10 in Fettschrift eingezeichnet. Die Liste LI1* ("Applikationsliste (application list)") kann alle aktivierten MMS Applikationen und deaktivierten, abonnierten MMS Applikationen sowie ggf. anstelle der separaten Ergenis-Anforderungsliste RL jeweils zu jeder aufgerufenen Applikation ein zugeordnetes Flag bzw. einen zugeordneten Marker für die Resultatmitteilung enthalten, so dass eine gemeinsame Appliaktionsauswahl-/Resultatanforderungs-Liste gebildet ist. Bei der Auswahlliste von Figur 5 sind beispielsweise Ankreuzkästchen RLK zum Markieren einer gewünschten Resultatsmitteilung hinter jeder angebotenen Applikation in einer gemeinsamen Liste LI aufgeführt. Alternativ dazu kann auch eine gleichlange Liste "Result request list" mit den angefragten Resultatmitteilungen zweckmäßig sein, die eigens in einem Steuersignal an den empfangsseitigen Relais/Server RSB übertragen und von dort aus an den jeweilig angesprochenen Applikationsserver weitergeleitet wird.

Der MMS Relais/Server RSB wertet die gekennzeichnete Auswahlliste LI* aus, priorisiert sie und verfährt mit der Organisation zur Ausführung der MMS Applikationen in analoger Weise, wie es im obigen sendeseitigen Modifikationsfall aufgezeigt worden ist. Nachdem alle MMS Applikationen durchgeführt worden sind, schickt der MMS Relais/Server RSB die MM mit Hilfe der Nachricht S14 *"MM1_retrieve.REQ"* an die Kommunikationseinheit UB. Dem Anwender (Empfänger der MM) wird ggf. zusätzlich noch die Liste mit den Resultaten übermittelt, die von ihm angefordert wurden. Diese Ergebnisreportliste RL* kann vorzugsweise als zusätzliches Informationselement in die Nachricht S14 *"MM1_retrieve.RES"* eingefügt werden. Dies ist in der Figur 11 dargestellt, wo die Ergebnisreportliste RL* in das Transportsignal S14 als Extra-Informationselement auf genommen worden ist. Beispielhafte Erweiterungen der Nachricht *"MM1_retrieve.RES"* sind dabei in Fettschrift eingetragen. Die Liste "Result report list" enthält dort alle angefragten Resultatmitteilungen.

Alternativ zur Priorisierung der Applikationendurchführung durch den jeweiligen Relay/Server wie z.B. RSB kann der MMS User Agent der jeweilig angekoppelten Kommunikationseinheit UB (bzw. deren Anwender) die Priorisierung und die Organisation zur Ausführung der MMS Applikationen ggf. selber übernehmen, indem er hierzu die schon vorhandene Nachricht S3 *MM1_forward.REQ* nutzt. Näheres hierzu ist in den nachfolgenden Beispielen 4 und 5 angegeben.

### Beispiel 3 (Empfänger):

Der Benutzer hat die MMS Applikation A4 ohne Resultatmitteilung für seine zu empfangenden MMs abonniert. Der Empfänger wird vom zugeordneten MMS Relais/Server RSB über die Schnittstelle MM1 durch die Nachricht S5 *"MM1_notification.REQ"* über eine neue MM MM1 informiert, deren Empfang mit dem Antwortsignal S6 *"MM1_notification.RES"* quittiert wird (siehe Figuren 2, 9). In der Nachricht S5 *"MM1_notification.REQ"* wird ihm zudem von seinem MMS Service Provider eine Liste von zwei MMS Applikationen A5 und A6 für zu empfangende MMs mitgeteilt. Bevor er mit Hilfe des Anforderungssignals S13 *"MM1_retrieve.REQ"* die MM anfordert, wählt er in einem entsprechenden Menü aus, dass er zusätzlich noch die Applikation A5 mit Resultatmitteilung auf die MM angewendet haben möchte. Diese gekennzeichnete Auswahlliste wird dann über die Schnittstelle MM1 mit Hilfe der erweiterten Nachricht S13 *"MM1_retrieve.REQ"* vom MMS User Agent der empfangsseitigen Kommunikationseinheit UB zum zugeordneten MMS Relais/Server RSB übermittelt (siehe Figur 9). Der MMS Relais/Server RSB wertet diese Auswahlliste aus, priorisiert sie und verfährt mit der Organisation zur Ausführung der MMS Applikationen in entsprechender Weise wie es zu Beispiel 1 beschrieben worden ist. Nachdem nun alle MMS Applikationen durchgeführt wurden, schickt der MMS Relais/Server die modifizierte MM MN1* und die Ergebnisreportliste RL* mit den Resultaten mit Hilfe der erweiterten Nachricht S14 *"MM1_retrieve.RES"* (siehe Figur 11) an den MMS User Agent der empfangenden Kommunikationseinheit UB.

Alternativ zur Übermittlung einer Auswahlliste kann es ggf. zweckmäßig sein, die gewünschten Applikationen zeitlich nacheinander durch separate Anforderungssignale S7, S9, S11 aufzurufen. Die Ausführung der jeweilig aufgerufenen Applikation wird der empfangenden Kommunikationseinheit UB vom Relais/Server RSB jeweils durch ein Quittierungssignal wie z.B. S8 zum Anforderungssignal S7, S10 zum Anforderungssignal S9, S12 zum Anforderungssignals S11 bestätigt. Dies ist in der Figur 9 veranschaulicht. Nachdem alle gewünschten MMS Applikationen durch Einzelaktivierungen aufgrund einzeln abgeschickter Anforderungssignale wie z.B. S7, S9, S11 durchgeführt worden sind, wird der Empfänger vom MMS Relais/Server RSB über die Schnittstelle MM1 durch eine Nachricht S5* *"MM1_notification.REQ"* über die fertig modifizierte MM (die nach der Abarbeitung der gewünschten MMS Applikationen an Stelle der originalen MM gespeichert wird) informiert. Deren Empfang wird mit der Nachricht S6* *"MM1_notification.RES"* quittiert. Danach fragt der MMS User Agent der Kommunikationseinheit UB (bzw. der Anwender) mit Hilfe der Nachricht S13 *"MM1_retrieve.REQ"* (diesmal jedoch ohne eine Liste von MMS Applikationen) nach der Übermittlung der modifizierten MM MN1*, die erst dann mit der Nachricht S14 *"MM1_retrieve.RES"* vom MMS Relais/Server RSB zum MMS User Agent der Kommunikationseinheit UB übermittelt wird.

### Beispiel 4 (Empfänger):

Der Benutzer hat die MMS Applikation A4 ohne Resultatmitteilung für seine zu empfangenden MMs abonniert. Zudem wird ihm von seinem MMS Service Provider eine Liste von zwei MMS Applikationen A5 und A6 für zu empfangende MMs angeboten. Der Empfänger wird vom MMS Relais/Server RSB durch die Benachrichtigung S5 *"MM1_notification.REQ"* über eine neue MM informiert, deren Empfang mit der Nachricht S6 *"MM1_notification.RES"* quittiert wird. Bevor er mit dem anforderungssignal *"MM1_retrieve.REQ"* die MM anfordert, wählt er aus, dass er zusätzlich noch die Applikationen A5 und A6 mit Resultatmitteilung auf die MM angewendet haben möchte. Diese Liste wird dann vom MMS User Agent seiner kommunikationseinheit UB priorisiert, z.B. mit der Reihenfolge A5, A6. Für die erste MMS Applikation A5 sendet der MMS User Agent der Kommunikationseinheit UB dann die Nachricht *MM1_forward.REQ* (siehe Figur 12) an den zuständigen MMS Relais/Server RSB. Dazu wird das Informationelement "Recipient address" mit der Adresse dieser MMS Applikation beim zuständigen MMS VASP belegt (die Adresse kann der MMS User Agent beispielsweise aus der zuvor übermittelten Auswahlliste wie z.B. LI von Figur 5 entnehmen). Der angesprochene MMS VASP Server MVA5 erhält daraufhin die MM vom MMS Relais/Server RSB, führt die MMS Applikation A5 auf die MM aus und sendet die - eventuell modifizierte - MM an den MMS Relais/Server RSB zurück. Daraufhin erhält der MMS User Agent der Kommunikationseinheit UB erneut die Nachricht *"MM1_notification.REQ"* über die mit der Applikation A5 modifizierten MM, deren Empfang mit der *"MM1_notification.RES"* quittiert wird. Das gleiche wird dann, z.B. automatisch (also ohne Einfluss des Anwenders) oder nach Bestätigung durch den Anwender für die MMS Applikation A6 gemacht. Es wird erneut die Nachricht *"MM1_forward.REQ"* versendet, diesmal für die zweite MMS Applikation A6, usw. Das bedeutet also, dass für jede einzelne gewünschte MMS Applikation, die auf die MM spezifisch angewandt worden ist, ein eigenes Benachrichtungssignal *"MM1_forward.REQ"* zur empfangsseitigen Kommunikationseinheit UB übermittelt wird.

Nachdem nach diesem Verfahren alle ausgewählten MMS Applikationen auf die Multimedia-Nachricht angewendet wurden, kann der MMS User Agent der Kommunikationseinheit UB die MM mit Hilfe der Nachricht S13 *"MM1_retrieve.REQ"* anfordern. Nach Empfang dieser Nachricht sorgt der MMS Relais/Server RSB zuvor noch dafür, dass die abonnierte MMS Applikation A4 auf die MM angewendet wird.

Nachdem nun alle (sowohl die ausgewählten als auch die abonnierten) MMS Applikationen durchgeführt wurden, schickt der MMS Relais/Server schliesslich die angeforderte, fertig modifizierte MM MN1* und die Liste mit den Resultaten (Ergebnisreportliste) mit Hilfe der erweiterten Nachricht S14 *"MM1_retrieve.RES"* (siehe Figur 11) an den MMS User Agent der Kommunikationseinheit UB.

Alternativ kann es (wie in Beispiel 3) zweckmäßig sein, dass nach den obigen beiden Schritten der Signalübertragung *"MM1_retrieve.REQ"* und dem Anwenden der MMS Applikation A4 zunächst noch ein Benachrichtigungssignal *"MM1_notification.REQ"* vom MMS Relais/Server RSB an den MMS User Agent der Kommunikationseinheit UB zur Anzeige der komplett modifizierten MM gesendet wird. Erst nach einem *"MM1_notification.RES"* und einem Anforderungssignal *"MM1_retrieve.REQ"* vom MMS User Agent der Kommunikationseinheit UB wird dann das Signal *"MM1_retrieve.RES"* zum Transfer der fertig modifizierten MM übermittelt.

### Beispiel 5 (Empfänger):

Der Benutzer hat die MMS Applikation A4 ohne Resultatmitteilung für seine zu empfangenden MMs abonniert. Zudem wird ihm von seinem MMS Service Provider eine Liste von zwei MMS Ap-plikationen A5 und A6 für zu empfangende MMs angeboten. Der Empfänger wird vom MMS R/S über die Schnittstelle MM1 durch die Nachricht *"MM1_notification.REQ"* über eine neue MM informiert, deren Empfang mit der Nachricht *"MM1_notification.RES"* quittiert wird. Der Anwender möchte noch die Applikation A5 und, falls die Applikation A5 erfolgreich angewendet worden ist, auch die Applikation A6 mit Resultatmitteilung auf die MM angewendet haben. Daher wählt er zunächst die Applikation A5 mit Resultatmitteilung aus. Für diese MMS Applikation A5 sendet der MMS UA dann die Nachricht *"MM1_forward.REQ"* an den zuständigen MMS Relais/Server RSB (so, wie es zu Beispiel 4 schon erläutert wurde). Nachdem die Applikation A5 vom MMS VASP Server MVA5 auf die MM angewendet wurde, wird der Empfänger vom MMS Relais/Server durch die Nachricht *"MM1_notification.REQ"* (die um das positive Resultat erweitert werden kann) über die modifizierte MM informiert, deren Empfang mit der Nachricht *"MM1_notification.RES"* an den Relais/Server RSB quittiert wird. Das positive Resultat könnte alternativ auch mit einer zusätzlichen Nachricht *"MM1_result_report.REQ"* übergeben werden.

Da im vorliegenden Ausführungsbeispiel das Resultat der Applikation A5 positiv war, entscheidet der Anwender nun, auch die Applikation A6 mit Resultatmitteilung anzuwenden. Es wird erneut die Nachricht *"MM1_forward.REQ"* versendet, diesmal für die zweite MMS Applikation A5, usw.

Der restliche Ablauf entspricht dem von Beispiel 4. Der Unterschied zwischen diesen beiden Beispielen 4 und 5 ist, dass in Beispiel 4 nach Auswahl aller gewünschten MMS Applikationen deren Abarbeitungsreihenfolge automatisch vom MMS User Agent der empfangenden Kommunikationseinheit priorisiert und organisiert wird. In Beispiel 5 hingegen entscheidet der Anwender zunächst, welche spezifische MMS Applikation zuerst angewendet werden soll. In Abhängigkeit von deren Resultat kann er dann weitere MMS Applikationen anwenden lassen. Zum Schluß fordert er schließlich die modifizierte MM an und lädt sie vom empfangsseitigen Relais/Server herunter. Damit sendet der Anwender bei diesem Ausführungsbeispiel erst dann ein Anforderungssignal zum Aufruf einer weiteren Applikation unter der vorgegebenen Bedingung, dass die vorausgegangene Applikationsanwendung erfolgreich war.

Allgemein betrachtet ist also auf zu empfangende MMs die Funktionalität und der Ablauf der sendeseitigen Modifikationsprozeduren entsprechend übertragbar.

Auf diese Weise kann der Anwender von MM zu MM wählen, welche MMS Applikationen auf eine zu versendende bzw. zu empfangende MM angewendet werden sollen. Dadurch ist eine höhere Flexibilität bei der Auswahl von MMS Applikationen für den Anwender gegeben (bisher nur als Abonnement möglich). Ebenfalls ist es jetzt möglich, dass der Anwender das Ergebnis einer MMS Applikation mitgeteilt bekommt. Dadurch wird es dem Anwender ermöglicht, Informationen über die Ausführung von MMS Applikationen auf seine MMs zu erlangen. Dadurch werden MMS Applikationen nachvollziehbar und somit vom Anwender stärker akzeptiert und genutzt.

Zusammenfassend wird dies insbesondere durch folgende Maßnahmen erreicht:
- Dem Anwender wird eine Liste mit verfügbaren MMS Applikationen übermittelt (vom jeweiligen MMS Relais/Server zum MMS User Agent der zugeordneten Kommunikationseinheit).
- Eine Auswahlliste (bei Bedarf inklusive Resultatanforderung) wird vom MMS User Agent der jeweiligen Kommunikationseinheit zum zugeordneten MMS Relais/Server übermittelt.
- Der MMS Relais/Server priorisiert die Abarbeitungsreihenfolge und organisiert das Zusenden der MMs zu den einzelnen MMS VASP Servern.
- alternativ zu vorherigen zwei Punkten: Der MMS User Agent der jeweiligen Kommunikationseinheit priorisiert die Abarbeitungsreihenfolge der ausgewählten Applikationen und organisiert das Zusenden der MMs zu den einzelnen MMS VASP Servern.
- Der MMS Relais/Server übermittelt Resultatenliste an den MMS User Agent (bzw. an den Anwender) der jeweiligen Kommunikationseinheit.
- Der Anwender kann bei der Bestellung eines Abonnement zu einer MMS Applikation wählen, ob er das Resultat hierzu mitgeteilt bekommen möchte.

Im Rahmen der Erfindung wird insbesondere auf folgende Abkürzungen und Definitionen Bezug genommen:
- GSM: GSM (Global System for Mobile Communications
- MM: Multimedia Message
- MN: Multimedia Nachricht (Synonym für MM)
- MMS: Multimedia Messaging Service
- MMSE: Multimedia Messaging Service Environment
- MMS R/S: MMS Relay (Relais)/Server
- MMS UA: MMS User Agent
- MMS VASP: MMS Value Added Service Provider
- SMS: Short Message Service
- UMTS: Universal Mobile Telecommunication System
- WAP: Wireless Application Protocol

## Patentansprüche

1. Verfahren zum Modifizieren einer Multimedia-Nachricht (MN1), die von einer ersten Kommunikationseinheit (UA) eines Funkkommunikationsnetzes (FN) abgeschickt wird, wobei vorab individuell für die jeweilig abzusendende Multimedia-Nachricht (MN1) von der sendenden Kommunikationseinheit (UA) spezifisch ein oder mehrere Applikationen (A1, A2, A3) vorausgewählt werden, wobei von der sendenden Kommunikationseinheit (UA) an mindestens eine sendeseitig zugeordnete Netzwerkkomponente (RSA) des Funkkommunikationsnetzes (FN) mindestens ein Steuersignal (SLI*) übertragen wird, mit dem dieser Netzwerkkomponente (RSA) die individuell ausgewählten Applikationen (A1, A2) mitgeteilt werden, wobei aufgrund dieses Steuersignals (SLI*) von der sendeseitig zugeordneten Netzwerkkomponente (RSA) veranlasst wird, dass die individuell für die vorliegende Multimedia-Nachricht (MN1) ausgewählten Applikationen (A1, A2) netzwerkseitig aktiviert und auf diese Multimedia-Nachricht (MN1) vor deren Versenden netzwerkseitig angewandt werden, und wobei erst dann die derart individuell modifizierte Multimedia-Nachricht (MN1*) von der sendeseitig zugeordneten Netzwerkkomponente (RSA) über die empfangsseitig zugeordnete Netzwerkkomponente (RSB) an eine zweite, empfangsseitige Kommunikationseinheit (UB) abgesandt wird.

2. Verfahren nach Anspruch 1,
**dadurch gekennzeichnet,**
**dass** als sendeseitig zugeordnete Netzwerkkomponente ein MMS Relais/Server (RSA) verwendet wird.

3. Verfahren nach einem der vorhergehenden Ansprüche,
**dadurch gekennzeichnet,**
**dass** die auswählbaren Applikationen (A1 mit A3) auf mindestens einer weiteren, separaten Netzwerkkomponente (MVA1 mit MVA3) ablauffähig bereitgestellt werden.

4. Verfahren nach Anspruch 3,
**dadurch gekennzeichnet,**
**dass** als weitere, separate Netzwerkkomponente für die Bereitstellung auswählbarer Applikationen (A1 mit A3) mindestens ein MMS Value Added Service Provider, VASP, Server verwendet wird.

5. Verfahren nach einem der vorhergehenden Ansprüche,
**dadurch gekennzeichnet,**
**dass** das Steuersignal (SLI*) in das Übertragungssignal der Multimedia-Nachricht (MN1) bei deren Versendung von der sendenden Kommunikationseinheit (UA) zur sendeseitig zugeordneten Netzwerkkomponente (RSA) integriert oder zusätzlich als Erweiterung aufgenommen wird.

6. Verfahren nach einem der Ansprüche 1bis 4,
**dadurch gekennzeichnet,**
**dass** das Steuersignal (SLI*) separat vor oder nach dem Übertragungssignal der Multimedia-Nachricht (MN1) zur sendeseitig zugeordneten Netzwerkkomponente (RSA) übertragen wird.

7. Verfahren nach einem der vorhergehenden Ansprüche,
**dadurch gekennzeichnet,**
**dass** der sendenden Kommunikationseinheit (UA) eine Auswahlliste (LI) mit ein oder mehreren netzwerkseitig verfügbaren Applikationen (A1 mit A3) von der sendeseitig zugeordneten Netzwerkkomponente (RSA) mit Hilfe mindestens eines Informationssignals (SLI) vorab zugestellt wird, bevor die jeweilige Multimedia-Nachricht (MN1) durch diese Netzwerkkomponente (RSA) an die zweite, empfangsseitige Netzwerkkomponente abgesandt wird.

8. Verfahren nach Anspruch 7,
**dadurch gekennzeichnet,**
**dass** von der sendenden Kommunikationseinheit (UA) mindestens eine oder mehrere bestimmte Applikation (A1, A2, A3) in der empfangenen Auswahlliste (LI) als aktiviert oder deaktiviert gekennzeichnet werden, so dass eine gekennzeichnete Auswahlliste (LI*) generiert wird.

9. Verfahren nach Anspruch 8,
**dadurch gekennzeichnet,**
**dass** die gekennzeichnete Auswahlliste (LI*) mit den ausgewählten Applikationen (A1, A2), die individuell für die jeweilig zu versendende Multimedia-Nachricht (MN1) netzwerkseitig zu aktivieren und/oder zu deaktivieren sind, von der jeweilig sendenden Kommunikationseinheit (UA) mit Hilfe des mindestens einen Steuersignals (SLI*) an die sendeseitig zugeordnete Netzwerkkomponente (RSA) zurückübertragen wird.

10. Verfahren nach Anspruch 9,
**dadurch gekennzeichnet,**
**dass** aufgrund der gekennzeichneten, zurückübertragenen Auswahlliste (LI*) von der sendeseitig zugeordneten Netzwerkkomponente (RSA) mindestens ein Aktivierungssignal (SN1, SN2) zur Aktivierung und Anwendung der jeweilig gewählten Applikation (A1, A2) auf die jeweilig zu versendende Multimedia-Nachricht (MN1) generiert wird.

11. Verfahren nach einem der vorhergehenden Ansprüche,
**dadurch gekennzeichnet,**
**dass** aufgrund des jeweiligen Steuersignals (SLI*) mindestens ein Aktivierungssignal (SN1, SN2) von der sendeseitig zugeordneten Netzwerkkomponente (RSA) an eine weitere Netzwerkkomponente (MVA1, MVA2) übermittelt wird, auf der die jeweilig ausgewählte Applikation (A1, A2) bereitgehalten wird, und dass mit diesem Aktivierungssignal (SN1, SN2) die dort aufgerufene Applikation (A1, A2) gestartet und auf die zu versendende Multimedia-Nachricht (MN1) angewandt wird.

12. Verfahren nach Anspruch 11,
**dadurch gekennzeichnet,**
**dass** die jeweilig zu modifizierende Multimedia-Nachricht (MN1) von der sendeseitig zugeordneten Netzwerkkomponente (RSA) mit Hilfe mindestens eines Übertragungssignals (N1, N2) an diejenige weitere Netzwerkkomponente (MVA1, MVA2) weitergeleitet wird, auf der die jeweilig ausgewählte Applikation (A1, A2) aktiviert wird.

13. Verfahren nach Anspruch 12,
**dadurch gekennzeichnet,**
**dass** die jeweilig aktivierte Applikation (A1, A2) auf der jeweiligen, weiteren Netzwerkkomponente (MVA1, MVA2) individuell auf die jeweilig abzusendende Multimedia-Nachricht (MN1) zur Modifizierung angewandt wird.

14. Verfahren nach Anspruch 13,
**dadurch gekennzeichnet,**
**dass** die durch die jeweilig angewandte Applikation (A1, A2) modifizierte Multimedia-Nachricht (MN1*) mittels Übertragungssignale (N1*, N2*) von der jeweiligen, weiteren Netzwerkkomponente (MVA1, MVA2) an die sendeseitige Netzwerkkomponente (RSA) zurückübertragen wird.

15. Verfahren nach Anspruch 14,
**dadurch gekennzeichnet,**
**dass** die fertig modifizierte Multimedia-Nachricht (MN1*) von der sendeseitigen Netzwerkkomponente (RSA) an diejenige Kommunikationseinheit (UB) übertragen wird, an die die ursprüngliche Multimedia-Nachricht (MN1) adressiert worden ist.

16. Verfahren nach einem der vorhergehenden Ansprüche,
**dadurch gekennzeichnet,**
**dass** eine Priorisierung der Abarbeitung der Applikationen (A1, A2, A3) durch die absendende Kommunikationseinheit (UA) und/oder durch deren sendeseitig zugeordnete Netzwerkkomponente (RSA) festgelegt wird.

17. Verfahren nach einem der vorhergehenden Ansprüche,
**dadurch gekennzeichnet,**
**dass** der sendenden Kommunikationseinheit (UA) ein Rückantwortsignal (N7) von der sendeseitig zugeordneten Netzwerkkomponente (RSA) übermittelt wird, ob die jeweilig ausgewählte Applikation (A1, A2) netzwerkseitig erfolgreich oder fehlerhaft auf die jeweilig abzusendende Multimedia-Nachricht (MN1*) angewendet worden ist.

18. Verfahren nach einem der vorhergehenden Ansprüche,
**dadurch gekennzeichnet,**
**dass** die jeweilige Kommunikationseinheit (UA) in einem Funkkommunikationsgerät, insbesondere Mobilfunkgerät, verwendet wird.

19. Verfahren nach einem der vorhergehenden Ansprüche,
**dadurch gekennzeichnet,**
**dass** das Funkkommunikationsnetz (FN) nach dem Universal Mobile Telecommunications System, UMTS, -Standard betrieben wird.

20. Verfahren zum Modifizieren einer Multimedia-Nachricht (MN1), insbesondere nach einem der vorhergehenden Ansprüche, die einer Kommunikationseinheit (UB) eines Funkkommunikationsnetzes (FN) mit Hilfe eines Benachrichtungssignals (S5) zum Empfang von einer empfangsseitig zugeordneten Netzwerkkomponente (RSB) angeboten wird, wobei vorab vor dem Abruf der jeweiligen Multimedia-Nachricht (MN1) durch die empfangende Kommunikationseinheit (UB) individuell für diese zu empfangende Multimedia-Nachricht (MN1) ein oder mehrere Applikationen (A4, A5, A6) durch die empfangende Kommunikationseinheit (UB) spezifisch vorausgewählt werden, wobei von der empfangenden Kommunikationseinheit (UB) an die empfangsseitig zugeordnete Netzwerkkomponente (RSB) des Funkkommunikationsnetzes (FN) mindestens ein Steuersignal (S7, S9, S11) übertragen wird, mit dem dieser Netzwerkkomponente (RSB) die ausgewählten Applikationen (A4, A5, A6) mitgeteilt werden, und wobei von der empfangsseitig zugeordneten Netzwerkkomponente (RSB) veranlasst wird, dass die individuell für die vorliegende Multimedia-Nachricht (MN1) ausgewählten Applikationen (A4, A5, A6) netzwerkseitig aktiviert und auf diese Multimedia-Nachricht (MN1) vor ihrem Empfangen bei der Kommunikationseinheit (UB) netzwerkseitig angewandt werden, und wobei erst dann die derart individuell modifizierte Multimedia-Nachricht (MN1*) an die empfangende Kommunikationseinheit (UB) übertragen wird.

21. Verfahren nach Anspruch 20,
**dadurch gekennzeichnet,**
**dass** das jeweilige Steuersignal (S7, S9, S11) zur Applikationsauswahl in ein Anforderungssignal (S13) integriert oder als zusätzliche Erweiterung aufgenommen wird, das zum Abruf der abrufbereiten Multimedianachricht (MN1) von der empfangenden Kommunikationseinheit (UB) an die empfangsseitig zugeordnete Netzwerkkomponente (RSB) gesendet wird.

22. Verfahren nach Anspruch 20,
**dadurch gekennzeichnet,**
**dass** das jeweilige Steuersignal (S7, S9, S11) separat vor oder nach einem Anforderungssignal (S13) zur empfangsseitig zugeordneten Netzwerkkomponente (RSB) übertragen wird, das zum Abruf der abrufbereiten Multimedianachricht (MN1) von der empfangenden Kommunikationseinheit (UB) an die empfangsseitig zugeordnete Netzwerkkomponente (RSB) gesendet wird.

23. Verfahren nach Anspruch 20,
**dadurch gekennzeichnet,**
**dass** das jeweilige Steuersignal (S7, S9, S11) zur Applikationsauswahl in ein Rückantwortsignal (S6) auf ein Benachrichtigungssignal (S5) integriert oder als zusätzliche Erweiterung aufgenommen wird, das der empfangenden Kommunikationseinheit (UB) von der empfangsseitig zugeordneten Netzwerkkomponente (RSB) zur Mitteilung einer abrufbereiten Multimedia-Nachricht (MN1) gesendet wird.

24. Verfahren nach Anspruch 20,
**dadurch gekennzeichnet,**
**dass** das jeweilige Steuersignal (S7, S9, S11) separat vor oder nach einem Rückantwortsignal (S6) auf ein Benachrichtigungssignal (S5) zur empfangsseitig zugeordneten Netzwerkkomponente (RSB) übertragen wird, das der empfangenden Kommunikationseinheit (UB) von der empfangsseitig zugeordneten Netzwerkkomponente (RSB) zur Mitteilung der abrufbereiten Multimedianachricht (MN1) gesendet wird.

25. Verfahren nach einem der Ansprüche 20 bis 24,
**dadurch gekennzeichnet,**
**dass** die Applikationen (A4 mit A6) auf mindestens einer weiteren, separaten Netzwerkeinheit (MVA4 mit MVA6) ablauffähig bereitgehalten werden.

26. Verfahren nach einem der Ansprüche 20 bis 25,
**dadurch gekennzeichnet,**
**dass** von der empfangsseitig zuständigen Netzwerkkomponente (RSB) eine Auswahlliste (LI) vorab vor dem Abruf der jeweiligen Multimedia-Nachricht (MN1) an die jeweilig angekoppelte, empfangende Kommunikationseinheit (UB) zur Auswahl mindestens einer Applikation (A4, A5, A6) übertragen wird.

27. Verfahren nach Anspruch 26,
**dadurch gekennzeichnet,**
**dass** die Auswahlliste (LI) von einem MMS Relais/Server (RSB) als empfangsseitig zugeordnete Netzwerkkomponente an die jeweilig empfangsseitig angekoppelte Kommunikationseinheit (UB) übermittelt wird.

28. Verfahren nach Anspruch 27,
**dadurch gekennzeichnet,**
**dass** die Auswahlliste (LI*) in einem Benachrichtigungssignal (SLI) übermittelt wird, durch das der empfangenden Kommunikationseinheit (UB) das netzwerkseitige vorliegen einer abrufbaren Multimedia-Nachricht (MN1) angezeigt wird.

29. Verfahren nach einem der Ansprüche 27 oder 28,
**dadurch gekennzeichnet,**
**dass** die Auswahlliste (LI*) mit den als zu aktivieren und/oder zu deaktivieren gekennzeichneten Applikationen (A4 mit A6) von der jeweilig empfangenden Kommunikationseinheit (UB) an den zugeordneten MMS Relais/Server (RSB) zurückübertragen wird.

30. Verfahren nach Anspruch 29,
**dadurch gekennzeichnet,**
**dass** die Auswahlliste (LI*) mit den aktivierten und/oder deaktivierten Applikationen (A4, A5, A6) vom empfangsseitigen MMS Relais/Server (RSB) an mindestens einen MMS Value Added Service Provider, VASP, Server (MVA4, MVA5, MVA6) als separate Netzwerkeinheit weiter übertragen wird.

31. Verfahren nach Anspruch 30,
**dadurch gekennzeichnet,**
**dass** vom jeweiligen MMS VASP Server (MVA4, MVA5, MVA6) die ein oder mehreren, in der übermittelten Auswahlliste (LI*) als ausgesucht gekennzeichneten Applikationen (A4, A5) aktiviert werden, und die jeweils aktivierte Applikation (A4, A5) individuell auf die jeweilig zu empfangende Multimedia-Nachricht (MN1) zur Modifizierung angewandt wird.

32. Verfahren nach Anspruch 31,
**dadurch gekennzeichnet,**
**dass** die jeweilig modifizierte Multimedia-Nachricht vom jeweiligen MMS VASP Server (MVA4, MVA5, MVA6) an den empfangsseitig angekoppelten MMS Relais/Server (RSB) über tragen wird.

33. Verfahren nach Anspruch 32,
**dadurch gekennzeichnet,**
**dass** die modifizierte Multimedia-Nachricht (MN1*) vom MMS Relais/Server (RSB) an die jeweilig empfangende Kommunikationseinheit (UB) übertragen wird, an die die ursprüngliche Multimedia-Nachricht (MN1) adressiert ist.

34. Verfahren nach einem der Ansprüche 20 bis 33,
**dadurch gekennzeichnet, dass** der empfangenden Kommunikationseinheit (UB) jeweils ein oder mehrere Rückantwortsignal (S8, S10, S12) von der empfangsseitig zugeordneten Netzwerkkomponente (RSB) übermittelt wird, ob die jeweilig ausgewählte Applikation (A4, A5, A6) erfolgreich oder fehlerhaft aufgrund des zuvor übermittelten Steuersignals (S7, S9, S11) auf die jeweilig zu empfangende Multimedia-Nachricht (MN1) angewendet worden ist.

35. Verfahren nach Anspruch 34,
**dadurch gekennzeichnet,**
**dass** die jeweiligen Rückantwortsignale (S8, S10, S12) in ein gemeinsames Übertragungssignal (S14) integriert oder als zusätzliche Erweiterung aufgenommen werden.

## Claims

1. Method for modifying a multimedia message (MN1) which is sent from a first communication unit (UA) of a radio communication network (FN), wherein in advance one or more applications (A1, A2, A3) are preselected specifically on an individual basis for the multimedia message (MN1) which is to be respectively transmitted from the transmitting communication unit (UA), wherein at least one control signal (SLI*) is transmitted from the transmitting communication unit (UA) to at least one network component (RSA), assigned on the transmission side, of the radio communication network (FN), with which control signal (SLI*) the individually selected applications (A1, A2) are communicated to this network component (RSA), wherein on the basis of this control signal (SLI*) the network component (RSA) which is assigned on the transmission side causes the applications (A1, A2) which are selected individually for the multimedia message (MN1) in question to be activated on the network side and to be applied on the network side to this multimedia message (MN1) before its transmission, and wherein only then is the multimedia message (MN1*) which is individually modified in this way dispatched from the network component (RSA) which is assigned on the transmission side to a second reception-side communication unit (UB) via the network component (RSB) which is assigned on the reception side.

2. Method according to Claim 1,
**characterized**
**in that** an MMS relay/server (RSA) is used as the network component which is assigned on the transmission side.

3. Method according to one of the preceding claims,
**characterized**
**in that** the selectable applications (A1 with A3) are made available in an executable fashion on at least one further, separate network component (MVA1 with MVA3).

4. Method according to Claim 3,
**characterized**
**in that** at least one MMS value added service provider, VASP, server is used as a further, separate network component for making available selectable applications (A1 with A3).

5. Method according to one of the preceding claims,
**characterized**
**in that** the control signal (SLI*) is integrated into the transmission signal of the multimedia message (MN1) when it is transmitted from the transmitting communication unit (UA) to the network component (RSA) which is assigned on the transmission side, or is additionally incorporated as an extension.

6. Method according to one of Claims 1 to 4,
**characterized**
**in that** the control signal (SLI*) is transmitted separately before or after the transmission signal of the multimedia message (MN1) to the network component (RSA) which is assigned on the transmission side.

7. Method according to one of the preceding claims,
**characterized**
**in that** a selection list (LI) with one or more applications (A1 with A3) which are available on the network side is delivered in advance to the transmitting communication unit (UA) from the network component (RSA) which is assigned on the transmission side, using at least one information signal (SLI), before the respective multimedia message (MN1) is dispatched by this network component (RSA) to the second, reception-side network component.

8. Method according to Claim 7,
**characterized**
**in that** the transmitting communication unit (UA) characterizes at least one or more specific applications (A1, A2, A3) in the received selection list (LI) as activated or deactivated, with the result that a characterized selection list (LI*) is generated.

9. Method according to Claim 8,
**characterized**
**in that** the characterized selection list (LI*) is transmitted back, with the selected applications (A1, A2) which are to be activated and/or deactivated on the network side individually for the multimedia message (MN1) which is to be respectively transmitted, to the network component (RSA), which is assigned on the transmission side, from the respectively transmitting communication unit (UA) using the at least one control signal (SLI*).

10. Method according to Claim 9,
**characterized**
**in that**, on the basis of the characterized selection list (LI*) which is transmitted back, the network component (RSA) which is assigned on the transmission side generates at least one activation signal (SN1, SN2) for activating and applying the respectively selected application (A1, A2) to the multimedia message (MN1) which is to be respectively transmitted.

11. Method according to one of the preceding claims,
**characterized**
**in that**, on the basis of the respective control signal (SLI*), at least one activation signal (SN1, SN2) is transferred from the network component (RSA), which is assigned on the transmission side, to a further network component (MVA1, MVA2) at which the respectively selected application (A1, A2) is kept available, and in that with this activation signal (SN1, SN2), the application (A1, A2) which is called there is started and is applied to the multimedia message (MN1) which is to be transmitted.

12. Method according to Claim 11,
**characterized**
**in that** the multimedia message (MN1) which is to be respectively modified is passed on from the network component (RSA) which is assigned on the transmission side, using at least one transmission signal (N1, N2), to that further network component (MVA1, MVA2) at which the respectively selected application (A1, A2) is activated.

13. Method according to Claim 12,
**characterized**
**in that** the respectively activated application (A1, A2) at the respective further network component (MVA1, MVA2) is individually applied to the multimedia message (MN1), which is to be respectively dispatched, for the purpose of modification.

14. Method according to Claim 13,
**characterized**
**in that** the multimedia message (MN1*), which is modified by the respectively applied application (A1, A2) is transmitted back to the transmission-side network component (RSA) by means of transmission signals (N1*, N2*) from the respective, further network component (MVA1, MVA2).

15. Method according to Claim 14,
**characterized**
**in that** the completely modified multimedia message (MN1*) is transmitted from the transmission-side network component (RSA) to that communication unit (UB) to which the original multimedia message (MN1) was addressed.

16. Method according to one of the preceding claims,
**characterized**
**in that** prioritization of the processing of the applications (A1, A2, A3) is defined by the dispatching communication unit (UA) and/or by the network component (RSA) thereof which is assigned on the transmission side.

17. Method according to one of the preceding claims,
**characterized**
**in that** a response signal (N7), specifying whether the respectively selected application (A1, A2) has been successfully or incorrectly applied on the network side to the multimedia message (MN1*) which is to be respectively dispatched, is transferred to the transmitting communication unit (UA) from the network component (RSA) which is assigned on the transmission side.

18. Method according to one of the preceding claims,
**characterized**
**in that** the respective communication unit (UA) is used in a radio communication device, in particular a mobile radio device.

19. Method according to one of the preceding claims,
**characterized**
**in that** the radio communication network (FN) is operated according to the Universal Mobile Telecommunications System, UMTS, Standard.

20. Method for modifying a multimedia message (MN1), in particular according to one of the preceding claims, which is offered to a communication unit (UB) of a radio communication network (FN) using a notification signal (S5) for the reception of a network component (RSB) which is assigned on the reception side, wherein one or more applications (A4, A5, A6) are specifically preselected individually by the receiving communication unit (UB), in advance before the calling of the respective multimedia message (MN1) by the receiving communication unit (UB), for this multimedia message (MN1) which is to be received, wherein the receiving communication unit (UB) transmits to the network component (RSB), which is assigned on the reception side, of the radio communication network (FN) at least one control signal (S7, S9, S11) with which this network component (RSB) is informed about the selected applications (A4, A5, A6), and wherein the network component (RSB) which is assigned on the reception side causes the applications (A4, A5, A6) which are selected individually for the multimedia message (MN1) in question to be activated on the network side and to be applied on the network side to this multimedia message (MN1) before its reception at the communication unit (UB), and wherein only then is the multimedia message (MN1*) which is modified individually in this way transmitted to the receiving communication unit (UB).

21. Method according to Claim 20,
**characterized**
**in that** the respective control signal (S7, S9, S11) for the application selection is integrated into a request signal (S13) or is incorporated as an additional extension, which request signal (S13) is transmitted, for the purpose of calling the multimedia message (MN1) which is ready to be called, from the receiving communication unit (UB) to the network component (RSB) which is assigned on the reception side.

22. Method according to Claim 20,
**characterized**
**in that** the respective control signal (S7, S9, S11) is transmitted separately, before or after a request signal (S13), to the network component (RSB) which is assigned on the reception side, which request signal (S13) is transmitted, for the purpose of calling the multimedia message (MN1) which is ready to be called, from the receiving communication unit (UB) to the network component (RSB) which is assigned on the reception side.

23. Method according to Claim 20,
**characterized**
**in that** the respective control signal (S7, S9, S11) for the application selection is integrated into a response signal (S6) to a notification signal (S5) or is incorporated as an additional extension, which response signal (S6) is transmitted to the receiving communication unit (UB) from the network component (RSB) which is assigned on the reception side, in order to communicate a multimedia message (MN1) which is ready to be called.

24. Method according to Claim 20,
**characterized**
**in that** the respective control signal (S7, S9, S11) is transmitted, separately before or after a response signal (S6) to a notification signal (S5), to the network component (RSB) which is assigned on the reception side, which response signal (S6) is transmitted to the receiving communication unit (UB) from the network component (RSB) which is assigned on the reception side, in order to communicate the multimedia message (MN1) which is ready to be called.

25. Method according to one of Claims 20 to 24,
**characterized**
**in that** the applications (A4 with A6) are held ready in such a way that they are executable on at least one further, separate network unit (MVA4 with MVA6).

26. Method according to one of Claims 20 to 25,
**characterized**
**in that** the network component (RSB) which is responsible on the reception side transmits a selection list (LI) in advance, before the calling of the respective multimedia message (MN1), to the respectively connected, receiving communication unit (UB) for the selection of at least one application (A4, A5, A6).

27. Method according to Claim 26,
**characterized**
**in that** the selection list (LI*) is transferred from an MMS relay/server (RSB), as a network component which is assigned on the reception side, to the communication unit (UB) which is respectively connected on the reception side.

28. Method according to Claim 27,
**characterized**
**in that** the selection list (LI*) is transferred in a notification signal (SLI) which indicates to the receiving communication unit (UB) that a callable multimedia message (MN1) is present on the network side.

29. Method according to one of Claims 27 or 28,
**characterized**
**in that** the selection list (LI*) with the applications (A4 with A6) which are characterized as to be activated and/or to be deactivated is transmitted back from the respectively receiving communication unit (UB) to the assigned MMS relay/server (RSB).

30. Method according to Claim 29,
**characterized**
**in that** the selection list (LI*) with the activated and/or deactivated applications (A4, A5, A6) is transmitted on from the reception-side MMS relay/server (RSB) to at least one MMS value added service provider, VASP, server (MVA4, MVA5, MVA6) as a separate network unit.

31. Method according to Claim 30,
**characterized**
**in that** the respective MMS VASP server (MVA4, MVA5, MVA6) activates the one or more applications (A4, A5) which are characterized as searched for in the transferred selection list (LI*), and the respectively activated application (A4, A5) is individually applied to the multimedia message (MN1) which is to be respectively received, for the purpose of modification.

32. Method according to Claim 31,
**characterized**
**in that** the respectively modified multimedia message is transmitted from the respective MMS VASP server (MVA4, MVA5, MVA6) to the MMS relay/server (RSB) which is coupled on the reception side.

33. Method according to Claim 32,
**characterized**
**in that** the modified multimedia message (MN1*) is transmitted from the MMS relay/server (RSB) to the respectively receiving communication unit (UB) to which the original multimedia message (MN1) is addressed.

34. Method according to one of Claims 20 to 33,
**characterized**
**in that** in each case one or more response signals (S8, S10, S12), specifying whether the respectively selected application (A4, A5, A6) has been successfully or incorrectly applied to the multimedia message (MN1) to be respectively received, on the basis of the previously transferred control signal (S7, S9, S11) are transferred to the receiving communication unit (UB) from the network component (RSB) which is assigned on the reception side.

35. Method according to Claim 34,
**characterized**
**in that** the respective response signals (S8, S10, S12) are integrated into a common transmission signal (S14) or are incorporated as an additional extension.

## Revendications

1. Procédé de modification d'un message multimédia (MN1) qui est envoyé par une première unité de communication (UA) d'un réseau de communication radio (FN), dans lequel une ou plusieurs applications (A1, A2, A3) sont spécifiquement présélectionnées à l'avance de manière individuelle pour le message multimédia respectif à envoyer (MN1) par l'unité de communication émettrice (UA), dans lequel au moins un signal de commande (SLI*) est transmis par l'unité de communication émettrice (UA) à au moins un composant de réseau associé côté émission (RSA) du réseau de communication radio (FN), au moyen duquel les applications sélectionnées individuellement (A1, A2) sont communiquées à ce composant de réseau (RSA), dans lequel il est fait en sorte, sur la base de ce signal de commande (SLI*) par le composant de réseau associé côté émission (RSA), que les applications sélectionnées (A1, A2) individuellement pour le message multimédia présent (MN1) soient activées côté réseau et soient appliquées côté réseau à ce message multimédia (MN1) avant son émission, et dans lequel le message multimédia ainsi modifié individuellement (MN1*) est alors seulement envoyé par le composant de réseau associé côté émission (RSA) par l'intermédiaire du composant de réseau associé côté réception (RSB) à une seconde unité de communication côté réception (UB).

2. Procédé selon la revendication 1, **caractérisé en ce qu'**un relais/serveur MMS (RSA) est utilisé en tant que composant de réseau associé côté émission.

3. Procédé selon l'une quelconque des revendications précédentes, **caractérisé en ce que** les applications pouvant être sélectionnées (A1 avec A3) sont mises à disposition prêtes à l'exécution sur au moins un autre composant de réseau séparé (MVA1 avec MVA3).

4. Procédé selon la revendication 3, **caractérisé en ce qu'**en tant qu'autre composant de réseau séparé pour la mise à disposition d'applications pouvant être sélectionnées (A1 avec A3), on utilise au moins un serveur fournisseur de services à valeur ajoutée MMS, VASP.

5. Procédé selon l'une quelconque des revendications précédentes, **caractérisé en ce que** le signal de commande (SLI*) est intégré au signal de transmission du message multimédia (MN1) lors de son envoi par l'unité de communication émettrice (UA) au composant de réseau associé côté émission (RSA) ou y est en outre ajouté en tant qu'extension.

6. Procédé selon l'une quelconque des revendications 1 à 4, **caractérisé en ce que** le signal de commande (SLI*) est transmis séparément avant ou après le signal de transmission du message multimédia (MN1) au composant de réseau associé côté émission (RSA).

7. Procédé selon l'une quelconque des revendications précédentes, **caractérisé en ce qu'**une liste de sélection (LI) contenant une ou plusieurs applications disponibles côté réseau (A1 avec A3) est préalablement envoyée à l'unité de communication émettrice (UA) par le composant de réseau associé côté émission (RSA) à l'aide d'au moins un signal d'information (SLI), avant que le message multimédia (MN1) respectif soit envoyé par l'intermédiaire de ce composant de réseau (RSA) au second composant de réseau côté réception.

8. Procédé selon la revendication 7, **caractérisé en ce qu'**au moins une ou plusieurs applications déterminées (A1, A2, A3) sont marquées par l'unité de communication émettrice (UA) comme étant activées ou désactivées dans la liste de sélection (LI) reçue de manière à générer une liste de sélection marquée (LI*).

9. Procédé selon la revendication 8, **caractérisé en ce que** la liste de sélection marquée (LI*) contenant les applications sélectionnées (A1, A2) qui doivent être activées et/ou désactivées individuellement côté réseau pour le message multimédia respectif à émettre (MN1) est renvoyée au composant de réseau associé côté émission (RSA) par l'unité de communication émettrice respective (UA) à l'aide de l'au moins un signal de commande (SLI*).

10. Procédé selon la revendication 9, **caractérisé en ce que**, sur la base de la liste de sélection marquée renvoyée (LI*), au moins un signal d'activation (SN1, SN2) est généré par le composant de réseau associé côté émission (RSA) pour activer et appliquer l'application sélectionnée respective (A1, A2) au message multimédia respectif à émettre (MN1).

11. Procédé selon l'une quelconque des revendications précédentes, **caractérisé en ce que**, sur la base du signal de commande respectif (SLI*), au moins un signal d'activation (SN1, SN2) est transmis par le composant de réseau associé côté émission (RSA) à un autre composant de réseau (MVA1, MVA2) sur lequel l'application sélectionnée respective (A1, A2) est mise à disposition, et **en ce qu'**au moyen de ce signal d'activation (SN1, SN2), l'application qui y est appelée (A1, A2) est lancée et est appliquée au message multimédia à émettre (MN1).

12. Procédé selon la revendication 11, **caractérisé en ce que** le message multimédia respectif à modifier (MN1) est réacheminé par le composant de réseau associé côté émission (RSA) à l'aide d'au moins un signal de transmission (N1, N2) à l'autre composant de réseau (MVA1, MVA2) sur lequel l'application sélectionnée respective (A1, A2) est activée.

13. Procédé selon la revendication 12, **caractérisé en ce que** l'application respective activée (A1, A2) sur l'autre composant de réseau respectif (MVA1, MVA2) est appliquée au message multimédia respectif à émettre (MN1) pour le modifier.

14. Procédé selon la revendication 13, **caractérisé en ce que** le message multimédia (MN1*) modifié par l'application respective appliquée (A1, A2) est renvoyé au moyen de signaux de transmission (N1*, N2*) par l'autre composant de réseau respectif (MVA1, MVA2) au composant de réseau côté émission (RSA).

15. Procédé selon la revendication 14, **caractérisé en ce que** le message multimédia modifié terminé (MN1*) est transmis par le composant de réseau côté émission (RSA) à l'unité de communication (UB) à laquelle était adressé le message multimédia d'origine (MN1).

16. Procédé selon l'une quelconque des revendications précédentes, **caractérisé en ce qu'**une hiérarchisation du traitement des applications (A1, A2, A3) est établie par l'unité de communication émettrice (UA) et/ou par le composant de réseau qui lui est associé côté émission (RSA).

17. Procédé selon l'une quelconque des revendications précédentes, **caractérisé en ce qu'**un signal de réponse (N7) est transmis à l'unité de communication émettrice (UA) par le composant de réseau associé côté émission (RSA) si l'application sélectionnée respective (A1, A2) a été appliquée côté réseau avec succès ou en échec au message multimédia respectif à émettre (MN1*).

18. Procédé selon l'une quelconque des revendications précédentes, **caractérisé en ce que** l'unité de communication respective (UA) est utilisée dans un appareil de communication radio, notamment dans un appareil radio mobile.

19. Procédé selon l'une quelconque des revendications précédentes, **caractérisé en ce que** le réseau de communication radio (FN) est mis en fonctionnement conformément à la norme du Système Universel de Télécommunication avec les Mobiles, UMTS.

20. Procédé de modification d'un message multimédia (MN1), notamment selon l'une quelconque des revendications précédentes, qui est fourni à une unité de communication (UB) d'un réseau de communication radio (FN) à l'aide d'un signal de notification (S5) destiné à être reçu par un composant de réseau associé côté réception (RSB), dans lequel, préalablement à l'appel du message multimédia respectif (MN1) par l'unité de communication réceptrice (UB), une ou plusieurs applications (A4, A5, A6) son spécifiquement présélectionnées à l'avance par l'unité de communication réceptrice (UB) de manière individuelle pour ce message multimédia à recevoir (MN1), dans lequel au moins un signal de commande (S7, S9, S11) est transmis par l'unité de communication réceptrice (UB) au composant de réseau associé côté réception (RSB) du réseau de communication radio (FN), signal de commande avec lequel les applications sélectionnées (A4, A5, A6) sont communiquées à ce composant de réseau (RSB), et dans lequel il est fait en sorte par le composant de réseau associé côté réception (RSB) que les applications (A4, A5, A6) sélectionnées individuellement pour le message multimédia présent (MN1) soient activées côté réseau et soient appliquées côté réseau à ce message multimédia (MN1) avant sa réception au niveau de l'unité de communication (UB), et dans lequel le message multimédia ainsi modifié individuellement (MN1*) est alors seulement transmis à l'unité de communication réceptrice (UB).

21. Procédé selon la revendication 20, **caractérisé en ce que** le signal de commande respectif (S7, S9, S11) est intégré à un signal d'interrogation (S13) destiné à la sélection d'applications ou y est en outre ajouté en tant qu'extension supplémentaire, qui est envoyé par l'unité de communication réceptrice (UB) au composant de réseau associé côté réception (RSB) pour l'appel du message multimédia (MN1) prêt à être appelé.

22. Procédé selon la revendication 20, **caractérisé en ce que** le signal de commande respectif (S7, S9, S11) est transmis séparément au composant de réseau associé côté réception (RSB) avant ou après un signal d'interrogation (S13) qui est envoyé par l'unité de communication réceptrice (UB) au composant de réseau associé côté réception (RSB) pour appeler le message multimédia (MN1) prêt à être appelé.

23. Procédé selon la revendication 20, **caractérisé en ce que** le signal de commande respectif (S7, S9, S11) est intégré à un signal de réponse (S6) sur un signal de notification (S5) ou y est ajouté en tant qu'extension supplémentaire pour la sélection d'applications, lequel signal de notification est envoyé à l'unité de communication réceptrice (UB) par le composant de réseau associé côté réception (RSB) pour transmettre un message multimédia (MN1) prêt à être appelé.

24. Procédé selon la revendication 20, **caractérisé en ce que** le signal de commande respectif (S7, S9, S11) est transmis séparément au composant de réseau associé côté réception (RSB) avant ou après un signal de réponse (S6) sur un signal de notification (S5) qui est envoyé à l'unité de communication réceptrice (UB) par le composant de réseau associé côté réception (RSB) pour transmettre le message multimédia (MN1) prêt à être appelé.

25. Procédé selon l'une quelconque des revendications 20 à 24, **caractérisé en ce que** les applications (A4 avec A6) sont mises à disposition prêtes à être exécutées sur au moins une autre unité de réseau séparée (MVA4 avec MVA6).

26. Procédé selon l'une quelconque des revendications 20 à 25, **caractérisé en ce qu'**une liste de sélection (LI) est préalablement transmise à l'unité de communication réceptrice respective connectée (UB) par le composant de réseau associé côté réception (RSB) avant l'appel du message multimédia respectif (MN1) pour la sélection d'au moins une application (A4, A5, A6).

27. Procédé selon la revendication 26, **caractérisé en ce que** la liste de sélection (LI) est transmise par un relais/serveur MMS (RSB) en tant que composant de réseau associé côté réception à l'unité de communication respective connectée côté réception (UB).

28. Procédé selon la revendication 27, **caractérisé en ce que** la liste de sélection (LI*) est transmise dans un signal de notification (SLI) par l'intermédiaire duquel l'unité de communication réceptrice (UB) affiche la présence côté réseau d'un message multimédia pouvant être appelé (MN1).

29. Procédé selon l'une quelconque des revendications 27 ou 28, **caractérisé en ce que** la liste de sélection (LI*) contenant les applications (A4 avec A6) marquées comme devant être activées et/ou désactivées est renvoyée par l'unité de communication réceptrice respective (UB) au relais/serveur MMS (RSB) associé.

30. Procédé selon la revendication 29, **caractérisé en ce que** la liste de sélection (LI*) contenant les applications activées et/ou désactivées (A4, A5, A6) est retransmise par le relais/serveur MMS côté réception (RSB) à au moins un serveur fournisseur de services à valeur ajoutée MMS, VASP (MVA4, MVA5, MVA6), en tant qu'unité de réseau séparée.

31. Procédé selon la revendication 30, **caractérisé en ce que** l'une ou les plusieurs applications marquées comme étant choisies (A4, A5) dans la liste de sélection transmise (LI*) sont activées par le serveur VASP MMS respectif (MVA4, MVA5, MVA6), et **en ce que** l'application activée respective (A4, A5) est individuellement appliquée au message multimédia respectif à recevoir (MN1) pour la modification.

32. Procédé selon la revendication 31, **caractérisé en ce que** le message multimédia modifié respectif est transmis par le serveur VASP MMS respectif (MVA4, MVA5, MVA6) au relais/serveur MMS connecté côté réception (RSB).

33. Procédé selon la revendication 32, **caractérisé en ce que** le message multimédia modifié (MN1*) est transmis par le relais/serveur MMS (RSB) à l'unité de communication réceptrice respective (UB) à laquelle le message multimédia d'origine (MN1) est adressé.

34. Procédé selon l'une quelconque des revendications 20 à 33, **caractérisé en ce qu'**un ou plusieurs signaux de réponse (S8, S10, S12) sont respectivement transmis à l'unité de communication réceptrice (UB) par le composant de réseau associé côté réception (RSB) si l'application sélectionnée respective (A4, A5, A6) a été appliquée au message multimédia à recevoir respectif (MN1) avec succès ou en échec sur la base du signal de commande préalablement transmis (S7, S9, S11).

35. Procédé selon la revendication 34, **caractérisé en ce que** les signaux de réponse respectifs (S8, S10, S12) sont intégrés à un signal de transmission commun (S14) ou y sont ajoutés en tant qu'extension supplémentaire.
